(19) Europäisches Patentamt / European Patent Office / Office européen des brevets

(11) **EP 4 477 085 A1**

(12) **EUROPEAN PATENT APPLICATION**
published in accordance with Art. 153(4) EPC

(43) Date of publication:
**18.12.2024 Bulletin 2024/51**

(21) Application number: **22914608.9**

(22) Date of filing: **26.12.2022**

(51) International Patent Classification (IPC):
**A23D 7/00** (2006.01)    **A23D 7/04** (2006.01)
**A23D 9/04** (2006.01)

(52) Cooperative Patent Classification (CPC):
**A23D 7/00; A23D 7/04; A23D 9/04**

(86) International application number:
**PCT/CN2022/141767**

(87) International publication number:
**WO 2023/125354 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 28.12.2021  CN 202111625708
28.12.2021  CN 202111626927
28.12.2021  CN 202111628605

(71) Applicant: **Wilmar (shanghai) Biotechnology Research & Development Center Co., Ltd. Shanghai 200137 (CN)**

(72) Inventors:
• **GUO, Ruihua**
  **Shanghai 200137 (CN)**
• **LI, Sheng**
  **Shanghai 200137 (CN)**
• **YANG, Dongying**
  **Shanghai 200137 (CN)**
• **ZHANG, Hong**
  **Shanghai 200137 (CN)**
• **XU, Xuebing**
  **Shanghai 200137 (CN)**

(74) Representative: **Santoro, Sofia et al Società Italiana Brevetti S.p.A. Via Giosuè Carducci, 8 20123 Milano (IT)**

(54) **LOW-SATURATION GREASE COMPOSITION AND USE THEREOF**

(57)    A low-saturation grease composition and the use thereof. A grease composition, which comprises, based on the total mass thereof, 50-71% of grease, 25-40% of water, and 1-6% of a protein, wherein the grease has a saturation of 20-42%. A grease composition, which comprises: (1) palm oil and shea butter; and (2) liquid grease other than palm oil and shea butter, wherein the grease composition is in a solid state at a normal temperature, and has a saturation of 25-32%. The grease composition can be used for improving the juiciness, adhesiveness and chewiness of vegetarian food and improving the mouthfeel thereof, and is used for reducing water boiling loss and baking loss during cooking, or is used for increasing the food brittleness, reducing the oil precipitation rate in the food storage process, and reducing the stirring time of dough.

EP 4 477 085 A1

**Description**

**Technical Field**

The present disclosure relates to foods, and in particular to a low-saturated oil and fat composition and use thereof.

**Background Art**

The baking oils and fats used currently are mostly margarines or shortenings. They have a high saturation degree of substantially 50% or higher. They are solid and have crispiness to some extent by themselves. The problem of oil precipitation, among others, does not occur. With increasing attention paid to health issues associated with oils and fats, consumers are increasingly inclined to choose low-saturated oils and fats. Low-saturated oils and fats are mostly liquid. Since they have lost the support of a large amount of solid fats, their key performances, such as plasticity and hardness, are degraded seriously, and cannot meet the requirements of many food applications, such as baking or the like. In order to achieve the effect of a solid fat in use, it's necessary to modify the textures of a liquid oil and fat. The liquid oil may be solidified with the help of a gelling agent to form crystal clusters, embedded layers or a network structure. Alternatively, it's also possible to adjust the oil base to allow for its solidification while maintaining its low saturation degree to meet requirements of baking.

Animal oils and fats tend to have a high saturation degree, and they are solid at ambient temperature. Even if they are subjected to shear and heat during processing and melt to varying degrees, they still retain their shape to a certain extent. This allows animal oils and fats to provide better adhesiveness while giving a moister mouthfeel. Low-saturated liquid oils and fats cannot change dynamically along with process changes during processing, and thus are not comparable to animal oils and fats in mouthfeel.

**Summary**

In order to overcome the existing problems, the inventors of the present disclosure have developed an oil and fat composition by extensive experimentation, wherein the oil and fat composition has a low saturation degree.

Specifically, a first aspect of the present disclosure provides an oil and fat composition, comprising 50-71% oil and fat, 25-40% water and 1-6% protein, based on a total mass of the oil and fat composition.

In one or more embodiments, the oil and fat composition comprises 60-71% oil and fat or 50-60% oil and fat, based on the total mass of the oil and fat composition.

In one or more embodiments, the oil and fat comprises a liquid oil and fat and a solid oil and fat.

In one or more embodiments, the oil and fat comprises 60-95% liquid oil and fat and 5-40% solid oil and fat; preferably, the fat comprises 80-95% liquid oil and fat and 5-20% solid oil and fat, based on the total mass of the oil and fat.

In one or more embodiments, the liquid oil and fat comprises one or more of soybean oil, sunflower oil, peanut oil, rapeseed oil, cottonseed oil, corn oil, safflower oil, sesame oil, rice bran oil, linseed oil, olive oil, hazelnut oil, pecan oil, almond oil, cashew oil, macadamia oil, pistachio oil, palm kernel oil, coconut oil, and fractions and interesterified products thereof.

In one or more embodiments, the liquid oil and fat comprises one or more of soybean oil, corn oil, sunflower oil, rapeseed oil, rice oil, palm olein, shea olein, palm kernel olein, and coconut oil.

In one or more embodiments, the solid oil and fat comprises one or more of super palm stearin, palm stearin, hydrogenated palm oil, shea stearin, palm kernel stearin, palm oil mid-fraction (PMF), and fully hydrogenated vegetable oils; preferably, the fully hydrogenated vegetable oil is selected from one or more of fully hydrogenated rapeseed oil, fully hydrogenated soybean oil, fully hydrogenated sunflower oil, fully hydrogenated shea butter, fully hydrogenated rice oil, and fully hydrogenated palm kernel oil.

In one or more embodiments, the solid oil and fat comprises one or more of super palm stearin, palm stearin, hydrogenated palm oil, palm oil mid-fraction, and fully hydrogenated vegetable oils; preferably, the fully hydrogenated vegetable oil comprises fully hydrogenated soybean oil and/or fully hydrogenated rapeseed oil.

In one or more embodiments, the oil and fat composition comprises 0.2-0.8% transglutaminase and/or 1-4% gel.

In one or more embodiments, the protein is plant protein and/or animal protein.

In one or more embodiments, the plant protein is soy protein and/or cereal protein.

In one or more embodiments, the animal protein is whey protein and/or casein.

In one or more embodiments, the oil and fat composition comprises 1-4% or 2-6% protein, based on the total mass of the oil and fat composition.

In one or more embodiments, the gel is one or more of carrageenan, sodium alginate, and pectin.

In one or more embodiments, the oil and fat composition comprises: 60-71% oil and fat, 25-40% water, 1-4% protein and 0.2-0.8% transglutaminase; wherein the oil and fat has a saturation degree of 20-32%, based on the total mass of the oil and fat composition. Preferably, in these embodiments, the solid oil and fat in the oil and fat composition comprises one or more of super palm stearin, palm stearin, hydrogenated palm oil, shea stearin, palm kernel stearin, palm oil mid-fraction (PMF), and fully hydrogenated vegetable oils (e.g., fully hydrogenated rapeseed oil, fully hydrogenated soybean oil, fully hydrogenated sunflower oil, fully hydrogenated shea butter, fully hydrogenated rice oil, fully hydrogenated palm kernel oil).

In one or more embodiments, the oil and fat composition comprises 50-60% oil and fat, 2-6% protein, 1-4% gel and 31-40% water, based on the total mass of the oil and fat composition; wherein the oil and fat has a saturation degree of 29-42%, and the oil and fat composition has a solid fat content of 5-30% at 25°C. Preferably, in these embodiments, the solid oil and fat in the fat composition comprises one or more of super palm stearin, palm stearin, hydrogenated palm oil, palm oil mid-fraction (PMF), and fully hydrogenated vegetable oils; preferably, the fully hydrogenated vegetable oil comprises fully hydrogenated soybean oil and/or fully hydrogenated rapeseed oil.

A second aspect of the present disclosure provides a method for preparing an oil and fat composition, comprising:

(1) fully dissolving a protein in water to prepare an aqueous protein solution;
(2) mixing an oil and fat with the aqueous protein solution to form an emulsion;
(3) shaping the emulsion obtained in step (2).

In one or more embodiments, the oil and fat composition further comprises the protein and/or transglutaminase, and the method comprises step (2'): fully mixing the emulsion obtained in step (2) with the protein and/or transglutaminase before performing the shaping in step (3).

In one or more embodiments, step (2) is performed by slowly adding a liquid oil and fat into the aqueous protein solution under high-speed shearing conditions to prepare an O/W emulsion.

In one or more embodiments, the high-speed shearing conditions include a shear rate of 10,000-18,000 rpm, and a shear time of 5-15 min.

In one or more embodiments, in step (2'), the emulsion obtained is fully mixed with the transglutaminase, and then the resulting mixture is subjected to heating and shaping.

In one or more embodiments, the step of heating and shaping is performed at 37-42 °C for 0.5-1.5 h.

In one or more embodiments, in step (2'), the emulsion obtained is fully mixed with the protein, and then the resulting mixture is allowed to stand still for shaping.

In one or more embodiments, the oil and fat composition is the oil and fat composition according to any embodiment of the first aspect of the present disclosure.

A third aspect of the present disclosure provides an oil and fat composition comprising palm oil and shea butter, as well as a liquid oil and fat other than palm oil and shea butter.

In one or more embodiments, the oil and fat composition is solid at ambient temperature.

In one or more embodiments, the oil and fat composition has a saturation degree of 25-32%.

In one or more embodiments, the oil and fat composition has an iodine value of ≤100 g/100 g, preferably 60-100 g/100 g.

In one or more embodiments, the palm oil has an iodine value of ≤ 20 g/100 g.

In one or more embodiments, the shea butter has an iodine value of 45-75 g/100 g.

In one or more embodiments, the oil and fat composition comprises triglyceride PPP in an amount of 7-15%.

In one or more embodiments, the oil and fat composition comprises triglyceride SOS in an amount of 3.5-15%.

In one or more embodiments, the amount of the PPP is 7-10%.

In one or more embodiments, the amount of the SOS is 3.5-10%, preferably 3.5-6%.

In one or more embodiments, the liquid oil and fat other than palm oil and shea butter is selected from one or more of soybean oil, sunflower oil, peanut oil, rapeseed oil, cottonseed oil, corn oil, safflower oil, sesame oil, rice bran oil, linseed oil, olive oil, hazelnut oil, pecan oil, almond oil, cashew oil, macadamia oil, pistachio oil, palm kernel oil, coconut oil, and fractions and interesterified products thereof.

In one or more embodiments, the liquid oil and fat comprises soybean oil and/or sunflower oil.

In one or more embodiments, the liquid oil and fat comprises soybean oil and/or high oleic sunflower oil.

In one or more embodiments, based on the total mass of the oil and fat composition: the content of palm oil is 1-25%, preferably 5-20%; the content of shea butter is 5-40%, preferably 10-30%; the content of the liquid oil and fat is 50-80%, preferably 55-75%.

In one or more embodiments, the oil and fat composition comprises 12-18% palm oil, 10-30% shea butter, and 55-75% liquid oil and fat, wherein the PPP content in the oil and fat composition is 7-10%, and the SOS content is 3.5-6%. Preferably, the liquid oil and fat is either of soybean oil and high oleic sunflower oil or a mixture of both.

In one or more embodiments, the oil and fat composition further comprises an emulsifier.

In one or more embodiments, the emulsifier is selected from one or more of monoglycerides, lecithin, polyglycerol ricinoleate, propylene glycol monostearate and Tween.

In one or more embodiments, the content of the emulsifier is 0.5-3%, preferably 0.5-1%, based on the total mass of the oil and fat composition.

In some embodiments, the present disclosure provides a shortening or margarine, comprising the oil and fat composition according to any embodiment of the third aspect of the present disclosure.

In one or more embodiments, the shortening or margarine comprises 80-90 wt% of the oil and fat composition according to any embodiment of the third aspect of the present disclosure and 10-20 wt% of water.

A fourth aspect of the present disclosure provides a food comprising the oil and fat composition according to any embodiment of the first aspect of the present disclosure, the oil and fat composition and/or shortening or margarine according to any embodiment of the third aspect of the present disclosure, or prepared from a raw material comprising the oil and fat composition according to any embodiment of the first aspect of the present disclosure, the oil and fat composition and/or shortening or margarine according to any embodiment of the third aspect of the present disclosure. Preferably, all or part of the oil and fat in the food is the oil and fat composition according to any embodiment of the first aspect of the present disclosure, the oil and fat composition and/or shortening or margarine according to any embodiment of the third aspect of the present disclosure.

In one or more embodiments, the food is a meat product.

In one or more embodiments, the meat product comprises the oil and fat composition according to any embodiment of the first aspect of the present disclosure.

In one or more embodiments, the meat product is sausage, meatball, meat pie, or meat stuffing.

In one or more embodiments, based on the total mass of the sausage, the sausage comprises 5-20% of the oil and fat composition according to any embodiment of the first aspect of the present disclosure.

In one or more embodiments, the food product is a baked food.

In one or more embodiments, the baked food comprises the oil and fat composition and/or shortening or margarine according to any embodiment of the third aspect.

In one or more embodiments, the food is selected from biscuit, bread, cake, spread, mayonnaise, filling, crisp pastry, croissant and palmier, comprising the oil and fat composition and/or shortening or margarine according to any embodiment of the third aspect.

Technical Effects

Compared with the prior art, the oil and fat composition of the present disclosure has a low-saturated oil and fat content, a low boiling loss, a low baking loss, a moderate hardness, and good formability. Sausage made with the use of the oil and fat composition of the present disclosure is close to sausage made with conventional animal oils and fats in moistness, mouthfeel and flavor, but can reduce the risks of obesity and cardiovascular diseases as its plant-based.

According to the present disclosure, the low-saturated liquid oil and fat is effectively solidified via the electrostatic effect generated between the gel and the protein to provide a water-oil-gel-containing product. The low-saturated water-containing oil and fat composition product of the present disclosure can be used for foods, especially vegan meat products. The vegan meat products made with the low-saturated water-containing oil and fat composition product of the present disclosure have better performances in terms of juiciness, adhesiveness, chewiness and the like, as compared with liquid oils and fats. While saturation and oil and fat intake are reduced, the mouthfeel of the vegan meat products is improved to a larger extent.

In addition, when the oil and fat composition of the present disclosure (especially the oil and fat composition, shortening and margarine according to the third aspect) is used for making baked biscuits, the crispness of the biscuits can be increased, and the oil precipitation ratio of the biscuits can be reduced significantly during storage. When it is used for making baked bread, the dough formation time can be shortened significantly, thereby reducing the operating cost. In addition, the oil and fat composition is also characterized by low saturation, which can avoid health hazards caused by high-saturated oils and fats.

**Detailed Description**

In the present disclosure, unless otherwise specified, percent (%) or part refers to percent by weight or part by weight based on the composition.

In the present disclosure, unless otherwise specified, the components or preferred components involved can be combined with each other to form new technical solutions.

In the present disclosure, unless otherwise specified, all of the embodiments and preferred embodiments mentioned herein can be combined with each other to form new technical solutions.

In the present disclosure, unless otherwise specified, all of the technical features and preferred features mentioned herein can be combined with each other to form new technical solutions.

In the present disclosure, unless otherwise specified, the sum of the contents of the components in the composition is 100%.

In the present disclosure, unless otherwise specified, the sum of the parts of the components in the composition may be 100 parts by weight.

In the present disclosure, unless otherwise specified, the numerical range "a-b" is a simplified representation of a set of all real numbers between a and b, wherein a and b are both real numbers. For example, the numerical range "0-5" means that all real numbers between "0-5" have been listed herein, and "0-5" is just a simplified representation of a set of these numerical values.

In the present disclosure, unless otherwise specified, the integer numerical range "a-b" is a simplified representation of a set of all integers between a and b, wherein a and b are both integers. For example, the integer numerical range "1-N" represents 1, 2, ..., N, where N is an integer.

In the present disclosure, unless otherwise specified, "a combination thereof' means a multi-component mixture of the elements, for example, a multi-component mixture of two, three, four, and up to the maximum possible number of components.

Unless otherwise specified, the term "a" or "an" used in the present specification means "at least one".

Unless otherwise specified, the percentages (including percentages by weight) described in the present disclosure are based on the total weight of the composition.

The ranges disclosed herein are formed with a lower limit and an upper limit. There may be one or more lower limits, and one or more upper limits, respectively. A given range is defined by selecting a lower limit and an upper limit. The selected lower and upper limits define the boundary of a particular range. All ranges that can be defined in this manner are inclusive and combinable, i.e., any lower limit can be combined with any upper limit to form a range. For example, if the ranges of 60-120 and 80-110 are listed for a particular parameter, it is understood that the ranges of 60-110 and 80-120 are also contemplated. In addition, if 1 and 2 are listed as the smallest values for a range, and if 3, 4, and 5 are listed for the largest values for the range, then the following ranges are all contemplated: 1-3, 1-4, 1-5, 2-3, 2-4, and 2-5.

Unless otherwise specified, all reactions mentioned herein are carried out at ambient temperature and pressure.

Unless otherwise specified, the reaction steps mentioned herein may be performed sequentially or non-sequentially. For example, one or more additional steps may be included between any two reaction steps, and the order of the reaction steps may also be switched. Preferably, the reaction processes herein are carried out sequentially.

<First Aspect>

The first aspect of the present disclosure provides an oil and fat composition, which can be used to replace foods such as sausage and meatball, especially animal oils and fats in meat products, or to improve the juiciness, adhesiveness and chewiness of vegan meat products, and enhance the mouthfeel of the vegan meat products. The oil and fat composition comprises 50-71% oil and fat, 25-40% water and 1-6% protein, based on the total mass of the oil and fat composition.

In the oil and fat composition, the oil and fat may comprise a liquid oil and fat and a solid oil and fat. In some embodiments, the oil and fat is exclusively a liquid oil and fat. In the present disclosure, the liquid oil and fat refers to an oil and fat that is liquid at ambient temperature, such as 20 °C; and the solid oil and fat refers to an oil and fat that is solid or semi-solid at ambient temperature, such as 20°C. Typically, the liquid oil and fat includes, but is not limited to, one or more of soybean oil, corn oil, sunflower oil (including high oleic sunflower oil), rapeseed oil, rice oil, palm olein, shea olein, palm kernel olein, and coconut oil; and the solid oil and fat includes, but is not limited to, one or more of super palm stearin, palm stearin, hydrogenated palm oil, shea butter stearin, palm kernel stearin, palm oil mid-fraction, and fully hydrogenated vegetable oils. Preferably, the fully hydrogenated vegetable oil can be selected from one or more of fully hydrogenated rapeseed oil, fully hydrogenated soybean oil, fully hydrogenated sunflower oil, fully hydrogenated shea butter, fully hydrogenated rice oil, and fully hydrogenated palm kernel oil. In some embodiments, the oil and fat composition comprises 60-71% oil and fat, based on the total mass of the oil and fat composition. In some embodiments, the oil and fat composition comprises 50-60% oil and fat, based on the total mass of the oil and fat composition. The saturation degree of the oil and fat used in the oil and fat composition of the present disclosure may be 20-42%, for example, 20-32%, 22-30%, 29-42%, or 29-40%.

The type of protein in the oil and fat composition of the present disclosure is not limited, and it may be a plant-originated protein or an animal-originated protein. Typically, the plant-originated protein may be originated from any protein-containing plant, including but not limited to soybean, mung bean, pea, buckwheat, oat, wheat, rice, and peanut. In some embodiments, the plant protein is soy protein and/or cereal protein. In some embodiments, the animal protein is whey protein and/or casein. In some embodiments, the protein is selected from one or more of soy protein isolate, whey protein and casein. In some embodiments, the oil and fat composition comprises 1-4%, preferably 2-4% of the protein, based on the total mass of the oil and fat composition. In some embodiments, the oil and fat composition comprises 2-6% of the protein, based on the total mass of the oil and fat composition. It should be understood that the protein described in the present disclosure also includes its salts. For example, casein also includes sodium caseinate. The protein content in the oil and fat composition described herein is the content calculated as protein.

The oil and fat composition of the present disclosure may further comprise either or both of a transglutaminase and a gel. The present disclosure may be practiced using a transglutaminase well known in the art, such as a commercially available transglutaminase. The gel may be one conventionally added to foods in the art, including but not limited to one or more of carrageenan, pectin, xanthan gum, guar gum, agar, gelatin, sodium alginate, locust bean gum, and konjac gum. In some embodiments, the gel is selected from one or more of carrageenan, sodium alginate, and pectin. If present in the oil and fat composition of the present disclosure, the content of the transglutaminase may be 0.2-0.8%, preferably 0.4-0.8%, and the content of the gel may be 1-4%, based on the total mass of the oil and fat composition.

In some embodiments, the oil and fat composition of the present disclosure comprises 60-71% oil and fat, 25-40% water, 1-4%, preferably 2-4% protein, and 0.2-0.8%, preferably 0.4-0.8% transglutaminase; wherein the saturation degree of the oil and fat is 20-32%, preferably 22-30%, based on the total mass of the oil and fat composition. Preferably, in these embodiments, the oil and fat comprises a liquid oil and fat, and optionally a solid oil and fat. In some embodiments, the fat is exclusively a liquid oil and fat. In some embodiments, the oil and fat comprises a liquid oil and fat and a solid oil and fat; preferably, based on the total mass of the oil and fat, the oil and fat comprises 60-95% of a liquid oil and fat and 5-40% of a solid oil and fat; in some embodiments, the oil and fat comprises 80-95% of a liquid oil and fat and 5-20% of a solid oil and fat; in some embodiments, the oil and fat comprises 75-91% of a liquid oil and fat and 9-25% of a solid oil and fat. Preferably, in these embodiments, the liquid oil and fat comprises one or more of soybean oil, corn oil, sunflower oil (including high oleic sunflower oil), rapeseed oil, rice oil, palm olein, shea olein, palm kernel olein, and coconut oil; and the solid oil and fat comprises one or more of palm stearin, hydrogenated palm oil, shea butter stearin, palm kernel stearin, palm oil mid-fraction, and fully hydrogenated vegetable oils (e.g., fully hydrogenated rapeseed oil, fully hydrogenated soybean oil, fully hydrogenated sunflower oil, fully hydrogenated shea butter, fully hydrogenated rice oil, and fully hydrogenated palm kernel oil). Preferably, the solid oil and fat comprises one or more of palm stearin, hydrogenated palm oil, palm mid-fraction (PMF) and fully hydrogenated vegetable oils. Preferably, the liquid oil and fat is selected from either or both of palm oil and soybean oil. Preferably, the solid oil and fat is selected from either or both of palm stearin and fully hydrogenated palm oil. Preferably, the hardness of the oil and fat composition is within the range of 130-350 g when measured using the method described in Example 1 of the present disclosure.

In some embodiments, based on the total mass of the oil and fat composition, the oil and fat composition of the present disclosure comprises: 60-71% oil and fat, 25-40% water, 2-4% protein and 0.4-0.8% transglutaminase; wherein the saturation degree of the oil and fat is 22-30%; wherein the oil and fat is a liquid oil and fat selected from either or both of palm oil and soybean oil, or the oil and fat comprises 75-91% liquid oil and fat and 9-25% solid oil and fat, wherein the liquid oil and fat is selected from either or both of palm oil and soybean oil, and the solid oil and fat is selected from either or both of palm stearin and fully hydrogenated palm oil. Preferably, the hardness of the oil and fat composition is within the range of 130-350 g.

In one or more embodiments, based on the total mass of the oil and fat composition, the oil and fat composition of the present disclosure comprises 50-60% oil and fat, 2-6% protein, 1-4% gel and 31-40% water; wherein the saturation degree of the oil and fat is 29-42%, preferably 29-40%, and the solid oil and fat content is 5-30%, preferably 5-27% at 25 °C. Preferably, based on the total mass of the oil and fat, the oil and fat comprises 60-95% liquid oil and fat and 5-40% solid oil and fat. In some embodiments, the oil and fat comprises 80-95% liquid oil and fat and 5-20% solid oil and fat. Preferably, in these embodiments, the liquid oil and fat in the oil and fat comprises one or more of soybean oil, corn oil, sunflower oil (including high oleic sunflower oil), rapeseed oil, rice oil, palm olein, shea olein, palm kernel olein, and coconut oil; preferably, the liquid oil and fat is selected from one or more of palm olein, shea olein, high oleic sunflower oil, and soybean oil; and the solid oil and fat in the oil and fat comprises one or more of super palm stearin, palm stearin, hydrogenated palm oil, palm oil mid-fraction, and fully hydrogenated vegetable oils, preferably either or both of super palm stearin and palm stearin; preferably, the fully hydrogenated vegetable oil comprises fully hydrogenated soybean oil and/or fully hydrogenated rapeseed oil. In some embodiments, the saturation degree of the oil and fat is 29%, 30% or 40%, and the solid fat content is 5.9%, 9.1% or 26.7% at 25°C. In some embodiments, the hardness of the oil and fat composition is within the range of 60-200 g when measured according to the method described in Example 2.

In one or more embodiments, based on the total mass of the oil and fat composition, the oil and fat composition of the present disclosure comprises 50-60% oil and fat, 2-6% protein, 1-4% gel and 31-40% water; wherein the saturation degree of the oil and fat is 29-40%, and the solid fat content is 5-27% at 25 °C; based on the total mass of the oil and fat, the oil and fat comprises 60-95% liquid oil and fat and 5-40% solid oil and oil, wherein the liquid oil and fat is selected from one or more of palm oil olein, shea olein, high oleic sunflower oil and soybean oil; and the solid oil and fat is selected from either or both of super palm stearin and palm stearin.

The oil and fat composition of the present disclosure may further comprise additional addible components. There is no particular limitation to the amount of the additional addible components which may be added in light of the practical requirements or the product quality standards. The types of the addible components may include one or more of food additives, flavoring agents, flavor substances, and pigments.

<Second Aspect>

The second aspect of the present disclosure provides a method for preparing an oil and fat composition, comprising the following steps:

(1) fully dissolving a protein in water to prepare an aqueous protein solution;
(2) mixing an oil and fat with the aqueous protein solution to form an emulsion;
(3) shaping the emulsion obtained in step (2).

Preferably, the oil and fat composition is the oil and fat composition according to any embodiment of the first aspect of the present disclosure.

In some embodiments, the oil and fat composition further comprises the protein and/or transglutaminase, and the method comprises step (2'): fully mixing the emulsion obtained in step (2) with the protein and/or transglutaminase before performing the shaping in step (3).

In some embodiments, step (2) is performed by slowly adding a liquid oil and fat into the aqueous protein solution under high-speed shearing conditions to prepare an O/W emulsion. In step (2), the oil and fat and the aqueous protein solution preferably form a uniform emulsion. Any conventional means for forming a uniform emulsion may be used to obtain the uniform emulsion, including but not limited to high-speed shearing homogenization. For example, under the high-speed shearing conditions, the oil and fat is slowly added to the aqueous protein solution. In the present disclosure, the high-speed shearing conditions may include a shear rate of 10,000-15,000 rpm and a shear time of 5-15 min.

In some embodiments, in step (2'), the emulsion obtained is fully mixed with the transglutaminase, and then the resulting mixture is subjected to heating and shaping. Preferably, the temperature for the step of heating and shaping is 37-42 °C, and the time is 0.5-1.5 h.

In some embodiments, in step (2'), the emulsion obtained is fully mixed with the protein, and then the resulting mixture is allowed to stand still for shaping.

In some embodiments, the method comprises: (a) fully dissolving a protein in water to prepare an aqueous protein solution; (b) mixing an oil and fat with the aqueous protein solution to form an emulsion; (c) fully mixing the emulsion with a transglutaminase; and (d) heating and shaping. Preferably, in these embodiments, in the oil and fat composition, based on the total mass of the oil and fat composition, the amount of the oil and fat is 60-71%, the amount of the protein is 1-4%, the amount of the water is 25-40%, and the amount of the transglutaminase is 0.2-0.8%. In some embodiments, the method is suitable for preparing the transglutaminase-containing oil and fat composition according to any embodiment of the present disclosure.

In some embodiments, the purpose of step (c) is to fully contact the emulsion with the enzyme. Any means that enables full contact of them may be used, such as high-speed shearing. Preferably, the shear rate of the high-speed shearing is 10,000-15,000 rpm, and the shear time is 1-2 min.

In some embodiments, the purpose of step (d) is to shape the oil and fat composition.

In some embodiments, the preparation method of the present disclosure mainly comprises: (i) fully dissolving a protein in water to prepare an aqueous protein solution; (ii) mixing an oil and fat with the aqueous protein solution to form an emulsion; (iii) fully mixing the emulsion obtained in step (2) with a gel; and (iv) standing still for shaping. Preferably, in these embodiments, in the oil and fat composition, based on the total mass of the oil and fat composition, the amount of the oil and fat is 50-60%, the amount of the protein is 2-6%, the amount of the water is 31-40%, and the amount of the gel is 1-4%; for the oil and fat, the saturation degree of the oil and fat is 29-42%, and the solid fat content is 5-30% at 25 °C. In some embodiments, the method is suitable for preparing the gel-containing oil and fat composition according to any embodiment of the present disclosure.

In some embodiments of the present disclosure, the purpose of step (iv) is to shape the oil and fat composition. Preferably, the manner for shaping includes, but is not limited to, standing still at ambient temperature or under refrigeration conditions for shaping, such as standing still at 0-7 °C for shaping.

The shape of the oil and fat composition of the present disclosure may depend on the requirements of the product, and may be a cube, a sphere, or any irregular shape.

<Third Aspect>

The third aspect of the present disclosure provides an oil and fat composition comprising: (1) palm oil and shea butter, and (2) a liquid oil and fat other than palm oil and shea butter. The oil and fat composition of the present disclosure is solid at ambient temperature (e.g., about 25 °C). By adjusting the oil base according to the present disclosure, there is prepared an oil and fat composition having a saturation degree of 25-32%. This oil and fat composition is solid at ambient temperature, and can be used as an oil base to prepare various low-saturated baking oils and fats. When it is used for making baked biscuits, the crispness of the biscuits can be increased, and the oil precipitation ratio of the biscuits can be reduced significantly during storage. When it is used for making baked bread, the dough formation time can be shortened significantly, thereby reducing the operating cost. In addition, the oil and fat composition is also characterized by low saturation, which can avoid health hazards caused by high-saturated oils and fats.

The oil and fat composition of the present disclosure has the following characteristics: an iodine value of palm oil ≤ 20 g/100 g; an iodine value of shea butter in the range of 45-75 g/100 g; a triglyceride PPP content in the range of 7-15%; and a triglyceride SOS content in the range of 3.5-15%.

As used herein, PPP refers to a triglyceride incorporating three palmitic acids; SOS refers to a triglyceride incorporating stearic acid at positions 1, 3 and oleic acid at position 2.

In the present disclosure, the palm oil may be a mixture of palm oils with different iodine values, as long as the iodine value of the resulting palm oil obtained by mixing is ≤20 g/100 g. Various known palm oils, including various commercially available palm oils, may be used to practice the present disclosure.

In the present disclosure, the shea butter may be a mixture of shea butters with different iodine values, as long as the iodine value of the resulting shea butter obtained by mixing is within the range of 45-75 g/100 g. Various known shea butters, including various commercially available shea butters, may be used to practice the present disclosure.

In a preferred embodiment, the content of PPP in the oil and fat composition of the present disclosure is 7-10%.

In a preferred embodiment, the content of SOS in the oil and fat composition of the present disclosure is 3.5-10%. In some embodiments, the content of SOS in the oil and fat composition is 3.5-6%.

In a preferred embodiment, the saturation degree of the oil and fat composition of the present disclosure is 25-32%, preferably 25-30%, and/or the iodine value is 60-100 g/100 g, preferably 65-90 g/100 g.

In the present disclosure, the liquid oil and fat other than palm oil and shea butter includes, but is not limited to, soybean oil, sunflower seed oil, peanut oil, rapeseed oil, cottonseed oil, corn oil, safflower seed oil, sesame oil, rice bran oil, linseed oil, olive oil, hazelnut oil, pecan oil, almond oil, cashew oil, macadamia oil, pistachio oil, palm kernel oil and coconut oil, as well as fractions and interesterified products of these liquid oils and fats. Any one or more of these liquid oils and fats may be used to prepare the oil and fat composition of the present disclosure. The sunflower oil may be high oleic sunflower oil. In some embodiments, in the oil and fat composition of the present disclosure, the liquid oil and fat comprises soybean oil and/or sunflower oil, especially high oleic sunflower oil.

In the oil and fat composition of the present disclosure, based on the total mass of the oil and fat composition, the content of palm oil may be 1-25%, the content of shea butter may be 5-40%, and the content of the liquid oil and fat other than palm oil and shea butter may be 50-80%. Preferably, the content of palm oil is 5-20%. Preferably, the content of shea butter is 10-30%. Preferably, the content of the liquid oil and fat is 55-75%.

In some embodiments, the oil and fat composition of the present disclosure comprises 12-18% palm oil, 10-30% shea butter, and 55-75% liquid oil and fat, wherein the PPP content in the oil and fat composition is 7-10%, and the SOS content is 3.5-6%. Preferably, the liquid oil and fat is either of soybean oil and high oleic sunflower oil or a mixture of both.

In some embodiments, the liquid oil and fat comprises 30-75% high oleic sunflower oil and 0-40% soybean oil, based on the total mass of the oil and fat composition.

The composition of the present disclosure may further comprise an emulsifier. The emulsifier may be one conventionally used for oils and fats in the art, including but not limited to one or more of monoglycerides (e.g., glyceryl monostearate), lecithin, polyglycerol ricinoleate, propylene glycol monostearate and Tween. The content of the emulsifier is 0.5-3% based on the total mass of the oil and fat composition. In some embodiments, the content of the emulsifier is 0.5-1%. In some embodiments, the content of the emulsifier is 1.0-2.5%.

The oil and fat composition of the present disclosure may be prepared by mixing the various components of the oil and fat composition of the present disclosure and an optional emulsifier. In some embodiments, the oil and fat composition of the present disclosure is obtained by melting the oil and fat composition (for example, melting at a temperature of 60-80 °C), and freezing the melted oil and fat, for example, putting it in a freezer and freezing it for a period of time. Generally, the freezing time may be determined according to the amount of the oil and fat. An exemplary freezing time may be 10-60 minutes. The outlet temperature of the freezer may be controlled at 10-20 °C, preferably 15-18 °C.

In some embodiments, the oil and fat composition of the present disclosure is used as an oil base to prepare a shortening or margarine. Therefore, the present disclosure also provides a shortening or margarine in which the content of the oil and fat composition of the present disclosure is 80-90 wt%, and the content of water is 10-20 wt%. The shortening or margarine may further comprise additional ingredients that are commonly present in shortenings, including but not limited to auxiliary materials such as antioxidants, salt, flavor essences and pigments. These ingredients may be used in conventional amounts in the art.

The shortening or margarine of the present disclosure may be prepared by conventional processes such as precooling, rapid cooling, kneading, maturation and the like. For example, an oil phase and a water phase are provided separately. The oil phase is melted, and then the oil phase and the water phase are mixed. After stirring at 50-70 °C for a sufficient period of time, the mixed material is processed by freezing, for example, putting the mixed material in a freezer and freezing it for a sufficient period of time. Thus, the shortening or margarine of the present disclosure is prepared. Usually, the freezing time may be determined according to the amount of the material. An exemplary freezing time may be 10-60 minutes. The outlet temperature of the freezer may be controlled at 10-20 °C, preferably 15-18 °C.

In some embodiments, the present disclosure provides a food, wherein all or part of the oil and fat in the food is the oil and fat composition, shortening or margarine according to the third aspect of the present disclosure. The food includes, but is not limited to, biscuit, bread, cake, spread, mayonnaise, filling, crisp pastry, croissant, palmier and the like.

In some embodiments, the present disclosure provides use of the oil and fat composition, shortening or margarine of the present disclosure for increasing food crispness, reducing oil precipitation during food storage, and reducing dough kneading time. Especially, the food may be a baked food, such as a biscuit. The dough may be bread dough. In the present disclosure, the dough kneading time refers to the time from addition of the oil and fat composition, shortening or margarine of the present disclosure to formation of gluten.

<Fourth Aspect>

The fourth aspect of the present disclosure provides a food comprising the oil and fat composition according to any embodiment of any aspect of the present disclosure, or prepared from a raw material comprising the oil and fat composition according to any embodiment of any aspect of the present disclosure.

In the food of the present disclosure, the content of the oil and fat composition may be 1-30%, for example, 5 to 20%, of the total mass of the food.

The food of the present disclosure may further comprise conventional food additives and seasonings, such as salt, monosodium glutamate, pepper, chili powder, starch, edible gels, and the like.

In some embodiments, the food is a meat product, including sausage, meatball, meat pie and meat stuffing. Preferably, the meat product comprises the oil and fat composition according to any embodiment of the first aspect of the present disclosure, preferably the transglutaminase-containing oil and fat composition according to any embodiment of the first aspect. The type of the meat is not limited in the present disclosure. Depending on the product requirements, it includes, but is not limited to, chicken, duck, pork, donkey meat, beef, mutton, and the like. A mixture of one or more types of meat may also be used as desired.

In some embodiments, the food is sausage. Based on the total mass of the sausage, the sausage comprises 5-20% of the oil and fat composition according to any embodiment of the first aspect of the present disclosure, preferably the transglutaminase-containing oil and fat composition according to any embodiment of the first aspect. In some embodiments, based on the total mass of the sausage, the sausage comprises 30-40% meat, 2-6% protein and 5-20% of the oil and fat composition. The type of the meat in the sausage is not limited in the present disclosure. Depending on the product requirements, it includes, but is not limited to, one or more of chicken, duck, pork, donkey meat, beef, mutton, and the like.

In some embodiments, the food is a baked food. Preferably, the baked food comprises the oil and fat composition and/or shortening or margarine according to any embodiment of the third aspect. Preferably, the food is selected from biscuit, bread, cake, spread, mayonnaise, filling, crisp pastry, croissant and palmier, comprising the oil and fat composition and/or shortening or margarine according to any embodiment of the third aspect.

In some embodiments, the food is a vegetarian food, such as a vegan meat product, comprising the oil and fat composition according to any embodiment of the first aspect of the present disclosure, or prepared from a raw material comprising the oil and fat composition; preferably, the oil and fat composition is the gel-containing oil and fat composition according to any embodiment of the first aspect. Preferably, the food is vegan chicken cutlet, vegan steak, vegan pork chop, vegan meatball, vegan meat pie or vegan meat filling. Usually, based on the total mass of the vegetarian food, the content of the oil and fat composition is 5-15%. To the vegetarian food, such as a vegan meat product, may also be added some food additives, seasonings and the like allowed to be added, including but not limited to one or more of salt, monosodium glutamate, pepper, chili powder, starch and edible gels. In some embodiments, the vegetarian food is a vegan meat product. Based on the total mass of the vegan meat product, the vegan meat product comprises 5-15% of the oil and fat composition of the present disclosure; preferably, based on the total mass of the vegan meat product, the vegan meat product comprises 50-60% soy-originated protein, preferably 38-45% textured soy protein, and 9-15% soy protein.

<Fifth Aspect>

In the gel-containing oil and fat composition of the present disclosure, due to the electrostatic effect generated between the gel and the protein, the low-saturated liquid oil and fat can be solidified effectively to obtain a water-oil-gel-containing product. The low-saturated water-and-gel-containing oil and fat composition of the present disclosure can be used for foods, especially vegan meat products. The vegan meat products made with the low-saturated water-and-gel-containing oil and fat composition product of the present disclosure have better performances in terms of juiciness, adhesiveness, chewiness and the like, as compared with liquid oils and fats. While saturation and oil and fat intake are reduced, the mouthfeel of the vegan meat products is improved to a larger extent. Therefore, in some embodiments, the present disclosure provides use of the gel-containing oil and fat composition according to any embodiment of the first aspect for improving the juiciness, adhesiveness and chewiness of a vegetarian food, especially a vegan meat product, and promoting its mouthfeel, or use of it for preparation of an oil and fat composition for improving the juiciness, adhesiveness and chewiness of a vegetarian food (especially a vegan meat product) and promoting its mouthfeel.

In some embodiments, the present disclosure further provides a method for improving the juiciness, adhesiveness and chewiness of a vegetarian food, especially a vegan meat product, and promoting its mouthfeel, the method comprising the step of preparing the vegetarian food, especially the vegan meat product, using the gel-containing oil and fat composition according to any embodiment in the first aspect of the present disclosure.

The transglutaminase-containing oil and fat composition according to any embodiment of the present disclosure has a low boiling loss, a low baking loss, a moderate hardness, and good formability. Sausage made with the use of it is close to sausage made with conventional animal oils and fats in moistness, mouthfeel and flavor, but can reduce the risks of obesity and cardiovascular diseases as it's plant-based. Therefore, the present disclosure further provides use of the transglutaminase-containing oil and fat composition according to any embodiment of the present disclosure for reducing boiling loss and baking loss during cooking, and use of it for preparing an oil and fat composition that can reduce boiling loss and baking loss during cooking.

The present disclosure will be further demonstrated with reference to the following examples, but the present disclosure is not limited to the following contents. The embodiments in the specification of the present disclosure are only used to illustrate the present disclosure with no limitation to the protection scope of the present disclosure. The protection scope of the present disclosure is only limited by the claims, and any omission, substitution or modification made by those skilled in the art on the basis of the embodiments disclosed in the present disclosure shall fall within the protection scope of the present disclosure.

In the following examples, conventional instruments and equipment in the art were used. Generally, the exemplary methods in the following examples where no specific conditions were specified were implemented under conventional conditions or under conditions recommended by the manufacturers. The various raw materials used in the following examples were conventional products commercially available from markets, unless otherwise specified. In the specification of the present disclosure and the following examples, unless otherwise specified, "%" means percentage by weight and "part" means part by weight.

**Example I**

The raw materials used in the examples and comparative examples under this Example I are as follows:

Soybean oil (SBO): Shanghai Kerry Food Industry Co., Ltd.;
Palm oil: Shanghai Kerry Food Industry Co., Ltd.;
Fully hydrogenated palm oil (FHPO): Shanghai Kerry Food Industry Co., Ltd.;
Palm stearate (ST): Kerry Specialty Oils (Shanghai) Co., Ltd.;
Tg enzyme (transglutaminase): Ajinomoto Co., Ltd.;
Soy protein isolate (G100): Qinhuangdao Jinhai Cereals & Oils Industry Co., Ltd.;
Soy protein isolate (G300): Qinhuangdao Jinhai Cereals & Oils Industry Co., Ltd.;
Carrageenan: SeaKem, CM611, 606023002;
Modified corn starch: Roquette (China) Nutrition Food Co., Ltd.;
Edible salt (refined): Shandong Lujing, 20-40 mesh;
MSG: Tianfu MSG, monosodium glutamate>99%;
White pepper: McCormick;
Sugar: Daehan Corporation;
Allura red: Anhui Suzhiwei Biotechnology Co., Ltd.;
Monascus red: Jiangxi Hengfeng Food Raw Materials Co., Ltd.;
Chicken breast: purchased from supermarket.
Protein casing: Haiaos.

Preparation of low-saturated oil and fat compositions

The various components were weighed according to the proportions shown in Table 1, heated and stirred at 80 °C for at least 30 min to obtain the corresponding oil phases.

Table 1: Oil phase formulas

|  | ST/% | Palm oil/% | FHPO/% | SBO/% | Saturation degree (%) |
|---|---|---|---|---|---|
| Low saturated oil and fat 1 | / | / | 9 | 91 | 25 |

(continued)

|  | ST/% | Palm oil/% | FHPO/% | SBO/% | Saturation degree (%) |
|---|---|---|---|---|---|
| Low saturated oil and fat 2 | / | 34 | / | 66 | 27 |
| Low saturated oil and fat 3 | 10 | / | / | 90 | 22 |
| Low saturated oil and fat 4 | 25 | 10 | / | 65 | 30 |
| Low saturated oil and fat 5 | 2 | / | / | 98 | 19 |
| Low saturated oil and fat 6 | 30 | 15 | / | 55 | 34 |
| Palm oil | / | 100 | / | / | 45 |
| Palm stearate | 100 | / | / | / | 67 |
| Soybean oil | / | / | / | 100 | 18 |

The materials were provided according to the compositions shown in Table 2. The preparation process is as follows:

Step (1): Fully dissolving the protein in water to prepare an aqueous protein solution.
Step (2): Under high-speed shearing conditions with a shear rate of 15,000 rpm, adding the oil and fat slowly to the aqueous protein solution to prepare an O/W emulsion.
Step (3): Adding the TG enzyme to the emulsion, and mixing thoroughly.
Step (4): Heating at 40 °C for 1 h to shape the oil and fat. Storing at 4 °C.

Table 2: Oil and fat composition formulas of examples and comparative examples

|  | Water/% | Oil and Fat/% | Oil and Fat type | Protein type | Protein/% | Enzyme/% |
|---|---|---|---|---|---|---|
| Ex. 1 | 27.12 | 70 | Low saturated oil and fat 1 | Soy protein isolate | 2.4 | 0.48 |
| Ex. 2 | 27.12 | 70 | Low saturated oil and fat 2 | Soy protein isolate | 2.4 | 0.48 |
| Ex. 3 | 30 | 62.88 | Low saturated oil and fat 3 | Soy protein isolate | 2.4 | 0.48 |
| Ex. 4 | 26.88 | 70 | Low saturated oil and fat 4 | Soy protein isolate | 2.6 | 0.52 |
| Ex. 5 | 36.4 | 60 | Low saturated oil and fat 1 | Whey protein | 3 | 0.6 |
| Ex. 6 | 25 | 70.2 | Low saturated oil and fat 2 | Casein | 4 | 0.8 |
| Comp. Ex. 1 | 27.12 | 70 | Low saturated oil and fat 5 | Soy protein isolate | 2.4 | 0.48 |
| Comp. Ex. 2 | 27.12 | 70 | Low saturated oil and fat 6 | Soy protein isolate | 2.4 | 0.48 |
| Comp. Ex. 3 | 27.12 | 70 | Soybean oil | Soy protein isolate | 2.4 | 0.48 |
| Comp. Ex. 4 | 27.12 | 70 | Palm oil | Soy protein isolate | 2.4 | 0.48 |
| Comp. Ex. 5 | 27.12 | 70 | Palm stearate | Soy protein isolate | 2.4 | 0.48 |
| Comp. Ex. 6 | 23.8 | 75 | Low saturated oil and fat 2 | Whey protein | 1 | 0.2 |
| Comp. Ex. 7 | 38.08 | 60 | Low saturated oil and fat 2 | Casein | 1.6 | 0.32 |

Determination of the processing performances of the oil and fat compositions

A sample of an oil and fat composition having a mass of $m_0$ was weighed accurately, and boiled in 500 mL of water for 10 min. After the moisture was wiped off from the surface, the mass was measured to be m. The boiling loss of the oil and fat composition = $(m_0-m)/m_0*100\%$.

A sample of an oil and fat composition having a mass of $m_0$ was weighed accurately, put into an oven under closed conditions, and baked at 140 °C for 6 min to simulate frying in a processing process. After the moisture was wiped off from the surface while the sample was still hot, the mass of the oil and fat composition was measured to be m. The baking loss of the oil and fat composition = $(m_0-m)/m_0*100\%$.

The hardness of a water-containing low-saturated oil and fat was tested using a texture analyzer (SMS, UK, TA.XT plus, P/6 6mm DAI CYLINDER STAINLESS probe) in a compression mode. Pre-test speed: 1.00 mm/sec, test speed: 2.00 mm/sec, post-test speed: 2.00 mm/sec. The distance was 10mm, and the stress was 5 g.

The results are shown in Table 3.

Table 3: Processing performances of examples and comparative examples

|  | Boiling loss (%) | Baking loss (%) | Hardness (g) |
|---|---|---|---|
| Ex. 1 | 1.70 | 6.25 | 142.33±5.71 |
| Ex. 2 | 0 | 5.73 | 175.00±10.60 |
| Ex. 3 | 2.30 | 11.25 | 260.87±34.59 |
| Ex. 4 | 2.52 | 13.11 | 295.66±29.57 |
| Ex. 5 | 0.85 | 3.43 | 154.91±6.00 |
| Ex. 6 | 3.77 | 9.01 | 144.36±9.41 |
| Comp. Ex. 1 | 0.81 | 6.53 | 51.22±2.05 |
| Comp. Ex. 2 | 8.09 | 27.17 | 920.31±62.92 |
| Comp. Ex. 3 | 0.79 | 6.04 | 45.76±2.96 |
| Comp. Ex. 4 | 10.53 | 31.10 | 1590.82±75.95 |
| Comp. Ex. 5 | 2.66 | 5.38 | 1821.75±82.97 |
| Comp. Ex. 6 | 16.72 | 27.61 | 52.72±5.01 |
| Comp. Ex. 7 | 13.91 | 20.33 | 41.20±4.33 |

Use of oil and fat composition in sausage.

Table 4: Sausage recipe

| Material name | Amount |
|---|---|
| Chicken breast | 35% |
| Pork fat/oil and fat product of the present disclosure | 12% |
| Edible salt | 1.30% |
| Phosphate salt | 0.20% |
| MSG | 0.10% |
| White pepper | 0.20% |
| Soy protein | 4% |
| Modified corn starch | 8% |
| Carrageenan | 0.30% |
| Allura red | 0.00% |
| Monascus red | 0.01% |
| Ice water | 39% |

Preparation process

The materials were provided according to the recipe shown in Table 4. The sausage was prepared according to the following process:

Step (1): Taking half of the ice water, adding the edible salt and phosphate to the ice water, adding the minced chicken breast after the edible salt and phosphate were completely dissolved, stirring until the viscosity increased and the surface became smooth, and marinating at 4 °C overnight.

Step (2): adding the soy protein to the chicken breast marinated in step (1), continuing kneading, adding the remaining ice water while kneading, then adding the carrageenan, seasoning and pigment, stirring evenly, adding the oil and fat composition product prepared according to the present disclosure, stirring evenly, then adding starch, and stirring evenly.

Step (3): filling the protein casing for shaping, then drying at 60 °C for 30 min, and steaming at 85 °C for 20 minutes.

Test methods

Sensory evaluation

Forty common male and female consumers, aged 18-60 years old, with a male-to-female ratio of 1:1, were selected randomly. After training, they conducted sensory evaluation of the sausages. The prepared sausages were scored in terms of appearance (30%), moistness (40%), and chewiness (30%), with a full score of 10. The higher the score, the better the product quality. First, it was observed whether the appearance was smooth and complete, and whether there was any shrinkage, cracking, or the like. After the sausage was sliced, the integrity and tightness of the cut surface was examined to determine whether it was loose and flat. The sausage slice was gently squeezed with fingers to feel whether it was cracked, and determine its springiness. A preliminary judgment on the moistness was made based on whether oil emerged after squeezing. The springiness and resilience of the sausage were determined by placing a piece of it into mouth and chewing. The evaluation was focused on the adhesiveness and moistness of the sausage, and the difference from animal meat sausage.

Evaluation results

Table 5 shows the evaluation results of the cut surface state and mouthfeel of the sausages of the various examples and comparative examples.

Table 5: Cut surface state and mouthfeel of sausages

| Ex./Comp. Ex. | Cut surface | State of oil and fat particles | Mouthfeel | Moistness |
|---|---|---|---|---|
| Ex. 1 | Texture: tight, springy | Oil and fat particles: complete, exhibiting obvious oil and fat moistness when squeezed | Mouthfeel: creamy, moderately springy | Fair |
| Ex. 2 | Texture: tight, springy | Oil and fat particles: complete, exhibiting obvious oil and fat moistness when squeezed | Mouthfeel: creamy, moderately springy | Good |
| Ex. 3 | Texture: tight, springy | Oil and fat particles: complete, exhibiting obvious oil and fat moistness when squeezed | Mouthfeel: creamy, moderately springy | Good |
| Ex. 4 | Texture: tight, springy | Oil and fat particles: complete, exhibiting obvious oil and fat moistness when squeezed | Mouthfeel: creamy, moderately springy | Good |
| Ex. 5 | Texture: tight, springy | Oil and fat particles: complete, exhibiting obvious oil and fat moistness when squeezed | Mouthfeel: creamy, moderately springy | Fair |
| Ex. 6 | Texture: tight, springy | Oil and fat particles: complete, exhibiting obvious oil and fat moistness when squeezed | Mouthfeel: creamy, moderately springy | Fair |
| Comp. Ex. 1 | Texture: tight, springy | Oil and fat particles: complete, exhibiting slight oil and fat moistness when squeezed | moderately springy | Fair |
| Comp. Ex. 2 | Texture: tight, springy | Oil and fat particles: complete, exhibiting slight oil and fat moistness when squeezed | moderately springy | Fair |

(continued)

| Ex./Comp. Ex. | Cut surface | State of oil and fat particles | Mouthfeel | Moistness |
|---|---|---|---|---|
| Comp. Ex. 3 | Texture: tight, springy | Oil and fat particles: complete, exhibiting slight oil and fat moistness when squeezed | moderately springy | Fair |
| Comp. Ex. 4 | Texture: tight, springy | Oil and fat particles: complete, exhibiting slight oil and fat moistness when squeezed | moderately springy | Fair |
| Comp. Ex. 5 | Texture: tight, springy | Oil and fat particles: complete, exhibiting poor fat moistness due to oil and fat solidification | moderately springy | Poor |
| Comp. Ex. 6 | Texture: tight, less springy | Oil and fat particles: incomplete, exhibiting oil and fat moistness when squeezed | Mouthfeel: creamy, less springy | Poor |
| Comp. Ex. 7 | Texture: tight, less springy | Oil and fat particles: incomplete, exhibiting no oil and fat moistness when squeezed | Mouthfeel: creamy, less springy | Poor |
| Comp. Ex. 8 | Texture: tight, springy | Oil and fat particles: complete, exhibiting obvious oil and fat moistness when squeezed | Mouthfeel: creamy, moderately springy | Good |

As it can be seen from the results in Table 5, all the products prepared according to the inventive examples exhibited good shape retention and simulated the appearance and moist mouthfeel of pork fat. With regard to Comparative Examples 1 and 3, as the saturation degree of the oil base and the content of the solid fat were low, despite good shape retention and appropriate oil and fat exudation, the exuded soybean oil had limited moisturizing effect on the system, quite different from the animal oil and fat exuded from pork fat. With regard to Comparative Examples 2, 4 and 5, the oil and fat solidified after cooling, possibly due to the unduly high saturation degree. The oil and fat loss of the entire system was large during processing, such that palm oil and palm stearin filled the system, and solid oil and fat formed below the melting point. As a result, the appearance and mouthfeel of pork fat couldn't be simulated. With regard to Comparative Examples 6 and 7, the shape retention of the oil and fat was poor, such that the shape retention of the particles was poor during processing, and a large amount of oil and fat exuded, was emulsified, and entered the sausage slurry, affecting the mouthfeel of the sausage. Pork fat was used in Comparative Example 8 which was used as a reference.

Table 6 shows the texture test results of the sausages obtained according to the examples and comparative examples.

Table 6: Sausage texture and sensory evaluation results

| Ex./Comp. Ex. | Hardness (g) | Springiness | Adhesiveness | Chewiness | Resilience | Score |
|---|---|---|---|---|---|---|
| Ex. 1 | 435.30±40.87 | 1.01±0.05 | 0.72±0.03 | 321.00±45.29 | 0.45±0.07 | 8 |
| Ex. 2 | 484.01±99.85 | 1.01±0.09 | 0.70±0.04 | 338.28±47.80 | 0.44±0.05 | 9 |
| Ex. 3 | 491.12±65.22 | 1.01±0.13 | 0.78±0.03 | 342.24±51.81 | 0.45±0.04 | 8.5 |
| Ex. 4 | 497.88±71.32 | 1.01±0.11 | 0.80±0.03 | 346.89±49.19 | 0.45±0.05 | 8.5 |
| Ex. 5 | 404.50±39.39 | 1.01±0.06 | 0.70±0.03 | 326.13±31.77 | 0.45±0.05 | 8.5 |
| Ex. 6 | 489.23±56.01 | 1.01±0.07 | 0.81±0.03 | 359.65±37.99 | 0.45±0.05 | 8 |
| Comp. Ex. 1 | 508.77±51.85 | 1.02±0.04 | 0.65±0.06 | 329.15±63.00 | 0.38±0.08 | 6 |
| Comp. Ex. 2 | 510.32±59.99 | 0.99±0.05 | 0.78±0.08 | 302.01±43.86 | 0.35±0.08 | 6 |
| Comp. Ex. 3 | 502.39±53.89 | 1.02±0.05 | 0.63±0.07 | 324.64±67.25 | 0.37±0.07 | 6 |
| Comp. Ex. 4 | 511.01±66.36 | 0.98±0.05 | 0.77±0.07 | 307.01±46.21 | 0.35±0.07 | 6 |
| Comp. Ex. 5 | 537.01±72.91 | 0.97±0.03 | 0.79±0.07 | 301.01±35.83 | 0.34±0.05 | 5 |

(continued)

| Ex./Comp. Ex. | Hardness (g) | Springiness | Adhesiveness | Chewiness | Resilience | Score |
|---|---|---|---|---|---|---|
| Comp. Ex. 6 | 422.12±71.85 | 0.90±0.09 | 0.55±0.04 | 299.98±52.87 | 0.31±0.02 | 5 |
| Comp. Ex. 7 | 414.01±45.85 | 090±0.07 | 0.51±0.07 | 300.78±42.95 | 0.30±0.05 | 5 |
| Comp. Ex. 8 | 561.42±21.77 | 1.00±0.10 | 0.72±0.04 | 400.37±25.00 | 0.46±0.06 | 9.5 |

As it can be seen from the results in Table 6, the examples exhibited better performances in terms of springiness, chewiness, and the like. Good shape retention and appropriate oil loss during processing imparted better adhesiveness and moistness to the sausage system, making it closer to animal fat products such as pork fat. The sausages prepared in the comparative examples lacked springiness and resilience at large. It can be inferred that they couldn't provide the unique mouthfeel of meat products during chewing.

The products were subjected to sensory evaluation in three dimensions: appearance, particle integrity and mouthfeel. Finally, the total score results of the examples and comparative examples were obtained, as shown in Table 6. As shown by the results, the total scores of the sausages prepared in all the examples exceeded 8 points, indicating that the sausages obtained by the present disclosure were generally well received. In the comparative examples, the total scores of all products except pork fat were less than 6 points, indicating that they were not liked by the subjects.

In summary, according to the processing performances and the product sensory evaluation results of the water-containing low-saturated oils and fats, the low-saturated oils and fats prepared by the present disclosure can be used in place of animal fats such as pork fat in food. They have the characteristics of low fat and low saturation, and can provide better product appearance and moist mouthfeel.

**Example II**

The raw materials used in the various examples and comparative examples involved in this Example II are as follows:

Soybean oil (SBO): Shanghai Kerry Food Industry Co., Ltd., 2020.11.03;
Shea olein: Shanghai Kerry Food Industry Co., Ltd., 2018.8.2;
Palm oil: Shanghai Kerry Food Industry Co., Ltd.;
High oleic sunflower oil (HOSFO): Cargill Cereals & Oils (Nantong) Co., Ltd.;
Super palm stearin (Hard ST): Kerry Specialty Oils (Shanghai) Co., Ltd., 2020.11.28;
Palm stearate (ST): Kerry Specialty Oils (Shanghai) Co., Ltd., 2020.11.28;
Sodium caseinate: Fonterra;
Soy protein 706Z: Qinhuangdao Jinhai Cereals & Oils Industry Co., Ltd., 2021.4.09;
Soy protein 307 (12 wells): Qinhuangdao Jinhai Cereals & Oils Industry Co., Ltd., 2021.4.09;
Soy protein isolate (G100): Qinhuangdao Jinhai Cereals & Oils Industry Co., Ltd.;
Carrageenan: SeaKem, CM611, 606023002, 2021.3.21;
Sodium alginate: Huake;
Pectin: Henan Beicheng Food Co., Ltd.;
Rattan pepper oil: Arawana rattan pepper oil;
Soy protein (SS): Qinhuangdao Jinhai Cereals & Oils Industry Co., Ltd., 2021.10.07;
Egg white powder: Jiangsu Changjing, 98%;
Modified starch: Starpro, acetylated distarch adipate, 99%;
Refined salt: Shandong Lujing, 20-40 mesh;
MSG: Tianfu MSG, monosodium glutamate>99%;
I+G (disodium 5'-ribonucleotide): CJ, 99%;
White pepper: McCormick;
White sugar: Daehan Corporation;
Essence: Swiss Firmenich chicken flavor food grade essence.

The main devices used are as follows:
Burger press: SA130, Sirman, Italy.

Preparation of low-saturated oil and fat compositions

The various components were weighed according to the proportions shown in Table 7, heated and stirred at 80 °C for at least 30 min to obtain the corresponding oil phases.

Method for determination of saturation degree

The fatty acid compositions were determined by gas chromatography according to AOCS Official Methods Ce 1b-89 Reapproved 1997. The proportion of saturated fatty acid(s) is the saturation degree.

Method for determination of solid fat content:

Reference was made to "GB/T 37517-2019 Animal and vegetable fats and oils-Determination of solid fat content by pulsed NMR-Indirect method".

Table 7: Oil phase formulas

| | Hard ST/% | ST/% | Shea olein/% | Palm oil/% | SBO/% | HOSFO/% | Saturation degree (%) | Solid fat content at 25 °C (%) |
|---|---|---|---|---|---|---|---|---|
| Low saturated oil and fat 7 | 6.15 | 6.15 | 22.55 | / | 59 | 6.15 | 29 | 9.1 |
| Low saturated oil and fat 8 | 6.8 | / | 27.2 | / | 66 | / | 30 | 5.9 |
| Low saturated oil and fat 9 | 18.3 | 18.3 | / | / | 63.4 | / | 40 | 26.7 |
| Low saturated oil and fat 10 | 10 | / | / | / | 90 | / | 25 | 7.7 |
| Low saturated oil and fat 11 | 30 | 10 | / | / | 60 | / | 44 | 31.6 |
| Soybean oil | / | / | / | / | 100 | / | 18 | 0 |
| Palm oil | / | / | / | 100 | / | / | 45 | 0.3 |
| Palm stearate | / | 100 | / | / | / | / | 67 | 61.2 |

The materials were provided according to the compositions shown in Table 8. The preparation process is as follows:

Step (1): Fully dissolving sodium caseinate in water to prepare an aqueous sodium caseinate solution.
Step (2): Shearing at a shear rate of 15000 rpm for 10 min, and slowly adding the liquid fat to the aqueous protein solution to prepare an O/W emulsion.
Step (3): Adding carrageenan to the emulsion and mixing thoroughly.
Step (4): Standing still at room temperature to shape the oil and fat. Storing at 4 °C.

Table 8: Oil and fat composition formulas of examples and comparative examples

| | Water/% | Oil and fat/% | Oil and fat type | Sodium caseinate/% | Carrageenan/% | Soy protein isolate/% | Sodium alginate/% | Whey protein/% | Pectin/% |
|---|---|---|---|---|---|---|---|---|---|
| Ex. 7 | 40 | 53.3 | Low saturated oil and fat 7 | 5.2 | 1.5 | / | / | / | / |

(continued)

|  | Water/ % | Oil and fat/% | Oil and fat type | Sodium caseinate/ % | Carragee nan/% | Soy protein isolate/% | Sodium alginate/% | Whey protein/% | Pectin/ % |
|---|---|---|---|---|---|---|---|---|---|
| Ex. 8 | 40 | 53.3 | Low saturated oil and fat 8 | 5.2 | 1.5 | / | / | / | / |
| Ex. 9 | 40 | 53.3 | Low saturated oil and fat 9 | 5.2 | 1.5 | / | / | / | / |
| Ex. 10 | 31 | 60 | Low saturated oil and fat 7 | 6 | 3 | / | / | / | / |
| Ex. 11 | 35 | 60 | Low saturated oil and fat 8 | 4 | 1 | / | / | / | / |
| Ex. 12 | 34 | 60 | Low saturated oil and fat 8 | / | / | 2 | 4 | / | / |
| Ex. 13 | 40 | 52 | Low saturated oil and fat 8 | / | / | / | / | 5 | 3 |
| Comp. Ex. 9 | 40 | 53.3 | Low saturated oil and fat 10 | 5.2 | 1.5 | / | / | / | / |
| Comp. Ex. 10 | 40 | 53.3 | Low saturated oil and fat 11 | 5.2 | 1.5 | / | / | / | / |
| Comp. Ex. 11 | 40 | 53.3 | Soybean oil | 5.2 | 1.5 | / | / | / | / |
| Comp. Ex. 12 | 34 | 60 | Palm oil | / | / | 2 | 4 | / | / |
| Comp. Ex. 13 | 40 | 53.3 | Palm stearate | 5.2 | 1.5 | / | / | / | / |
| Comp. Ex. 14 | 23.3 | 70 | Low saturated oil and fat 8 | / | / | / | / | 4 | 2.7 |
| Comp. Ex. 15 | 42.2 | 53.3 | Low saturated oil and fat 8 | 3 | 1.5 | / | / | / | / |
| Comp. Ex. 16 | 41 | 53.3 | Low saturated oil and fat 8 | 5.2 | 0.5 | / | / | / | / |
| Comp. Ex. 17 | / | 100 | Palm oil | / | / | / | / | / | / |

Determination of the processing performances of the oil and fat compositions

An oil and fat composition having a mass of $m_0$ was weighed accurately, and boiled in 500 mL of water for 10 min. After the moisture was wiped off from the surface, the mass was measured to be m. The boiling loss of the oil and fat composition = $(m_0-m)/m_0*100\%$.

An oil and fat composition having a mass of $m_0$ was weighed accurately, put into an oven under closed conditions, and baked at 140 °C for 6 min to simulate frying in a processing process. After the moisture was wiped off from the surface while the sample was still hot, the mass of the oil and fat composition was measured to be m. The baking loss of the oil and fat composition = $(m_0-m)/m_0*100\%$.

The hardness of a water-containing low-saturated oil and fat was tested using a texture analyzer (SMS, UK, TA.XT plus, P/6 6mm DAI CYLINDER STAINLESS probe) in a compression mode. Pre-test speed: 1.00 mm/sec, test speed: 2.00 mm/sec, post-test speed: 2.00 mm/sec. The distance was 10 mm, and the stress was 5 g.

The results are shown in Table 9.

Table 9: Processing performances of examples and comparative examples

|  | Boiling loss (%) | Baking loss (%) | Kneading loss (%) | Hardness (g) |
|---|---|---|---|---|
| Ex. 7 | 12.45 | 13.29 | 16.83 | 83.27±1.39 |
| Ex. 8 | 13.19 | 11.83 | 17.20 | 90.87±1.58 |
| Ex. 9 | 12.21 | 10.11 | 13.64 | 157.83±9.82 |
| Ex. 10 | 20.62 | 23.27 | 19.35 | 91.30±4.21 |
| Ex. 11 | 15.55 | 22.99 | 18.21 | 93.09±5.99 |
| Ex. 12 | 25.72 | 28.09 | 21.33 | 70.43±6.85 |
| Ex. 13 | 23.37 | 28.72 | 20.99 | 73.60±7.11 |
| Comp. Ex. 9 | 12.97 | 18.33 | 10.69 | 70.15±3.77 |
| Comp. Ex. 10 | 48.20 | 40.13 | 10.55 | 110.49±4.29 |
| Comp. Ex. 11 | 9.32 | 15.76 | 10.51 | 63.15±1.55 |
| Comp. Ex. 12 | 50.15 | 51.24 | 8.29 | 129.52±7.57 |
| Comp. Ex. 13 | 63.28 | 56.77 | 6.97 | 1006.95±25.84 |
| Comp. Ex. 14 | 78.22 | 77.61 | 40.84 | 52.72±5.01 |
| Comp. Ex. 15 | 73.91 | 70.33 | 41.57 | 41.20±4.33 |
| Comp. Ex. 16 | 81.55 | 69.19 | 42.26 | 47.81±5.21 |
| Comp. Ex. 17 | 100.00 | 100.00 | 21.72 | 59.35±2.41 |

As it can be seen from the results in Table 9, the systems of all examples were relatively stable during processing, wherein there was less oil and fat loss. This guaranteed better preservation of the oil and fat in the chicken cutlet system and ultimately provided a juicy mouthfeel. In the comparative examples, a large amount of oil and fat was commonly lost during processing. The lost oil and fat was possibly emulsified directly and entered the chicken cutlet slurry. Hence, it couldn't provide a moisturizing effect. Direct loss was also possible during a frying process or the like. Both the saturation degree of the oil and fat and the stability of the gel emulsion formed by carrageenan-sodium caseinate were important for retention of the oil and fat. An oil and fat with a saturation degree of less than 30 was used as an oil base in each of Comparative Examples 9 and 11. Although the oil and fat retention rate was high, because of its own low saturation degree, its contribution to moist mouthfeel was not as significant as that of an oil and fat with a higher saturation degree. It should be noted that the reason for the smallest kneading loss in Comparative Example 13 is that the saturation degree of the oil base was so high that it solidified quickly after leaving the emulsion system. Therefore, the oil and fat loss couldn't be measured in an effective way.

Use of the oil and fat compositions in vegan chicken cutlets

Table 10: Vegan chicken cutlet recipe

| Material name | Amount |
|---|---|
| 706Z (hard) textured | 40.80% |
| 307 (12 wells) | 11.90% |

(continued)

| Material name | Amount |
|---|---|
| Carrageenan | 0.20% |
| Water | 24.00% |
| Oil and fat | 8.00% |
| Rattan pepper oil | 2.20% |
| SS | 3.00% |
| Egg white powder | 4.00% |
| Modified starch | 2.00% |
| Refined salt | 0.70% |
| MSG | 0.50% |
| I+G | 0.10% |
| White pepper powder | 0.20% |
| White sugar | 0.50% |
| Essence | 1.80% |

Preparation process

The materials were provided according to the recipe shown in Table 10. Vegan chicken cutlets were prepared according to the following process:

Step (1): Rehydrating the soy proteins 307 and 706Z (hard); mincing the soy protein 307 through a 12-well plate after dehydration, the rehydration ratio (mass after dehydration/mass of dry matter) being about 2.8; texturizing the soy protein 706Z after rehydration, the rehydration rate being about 2.8; formulating onion-ginger water, the ratio between onion, ginger and water (onion : ginger : water) being (1:1:1.5); and weighing the rest materials for later use;
Step (2): adding the soy proteins, onion-ginger water, dry powder auxiliary materials, oil and fat, seasonings and essence in order, and mixing well;
Step (3): Using the burger press for shaping, each cake weighing 65 g; and stewing at 85 °C for 25 min to form a crust base (without vacuuming);
Step (4): Coating with flour - coating with egg liquid - coating with breadcrumbs; frying at 145 °C for 40 seconds - cooling - freezing quickly.

Test methods

Sensory evaluation

Forty common male and female consumers, aged 18-60 years old, with a male-to-female ratio of 1:1, were selected randomly. After training, they conducted sensory evaluation of the vegan chicken cutlets. The prepared vegan chicken cutlets were scored in terms of appearance (30%), moistness (40%), and chewiness (30%), with a full score of 10. The higher the score, the better the product quality.

Evaluation results:

Table 11 shows the evaluation results of the cut surface state and mouthfeel of the vegan chicken cutlets of the examples and comparative examples.

Table 11: Appearance and cut surface state of vegan chicken cutlets

| Ex./Comp. Ex. | Appearance | Cut surface | Chewiness | Moistness |
|---|---|---|---|---|
| Ex. 7 | Complete, no shrinkage | Protein texture being obvious; exhibiting oil and fat moistness when squeezed | Strong | Fair |

(continued)

| Ex./Comp. Ex. | Appearance | Cut surface | Chewiness | Moistness |
|---|---|---|---|---|
| Ex. 8 | Complete, no shrinkage | Protein texture being obvious; exhibiting oil and fat moistness when squeezed | Strong | Good |
| Ex. 9 | Complete, no shrinkage | Protein texture being obvious; exhibiting oil and fat moistness when squeezed | Strong | Good |
| Ex. 10 | Complete, no shrinkage | Protein texture being obvious; exhibiting oil and fat moistness when squeezed | Less strong | Fair |
| Ex. 11 | Complete, no shrinkage | Protein texture being obvious; exhibiting oil and fat moistness when squeezed | Less strong | Fair |
| Ex. 12 | Complete, no shrinkage | Protein texture being slightly obvious; exhibiting oil and fat moistness when squeezed | Less strong | Fair |
| Ex. 13 | Complete, no shrinkage | Protein texture being slightly obvious; exhibiting oil and fat moistness when squeezed | Less strong | Fair |
| Comp. Ex. 9 | Complete, no shrinkage | Protein texture being obvious; exhibiting oil and fat moistness when squeezed | Moderate | Poor |
| Comp. Ex. 10 | Complete, no shrinkage | Exhibiting protein texture; oil and fat solidified after cooling | Weak | Poor |
| Comp. Ex. 11 | Complete, no shrinkage | Protein texture being obvious; exhibiting oil and fat moistness when squeezed | Moderate | Poor |
| Comp. Ex. 12 | Complete, no shrinkage | Exhibiting protein texture, oil and fat solidified after cooling | Weak | Poor |
| Comp. Ex. 13 | Complete, no shrinkage | Exhibiting protein texture, oil and fat solidified after cooling | Weak | Poor |
| Comp. Ex. 14 | Complete, no shrinkage | Protein texture being not obvious | Weak | Poor |
| Comp. Ex. 15 | Complete, no shrinkage | Protein texture being not obvious | Weak | Poor |
| Comp. Ex. 16 | Complete, no shrinkage | Protein texture being not obvious | Weak | Poor |
| Comp. Ex. 17 | Complete, no shrinkage | Protein texture being obvious; exhibiting oil and fat moistness when squeezed | Strong | Good |

As it can be seen from the results in Table 11, all the products of the examples obtained according to the present disclosure exhibited obvious protein texture, strong chewiness and good oil and fat moistness. The oils and fats in Comparative Examples 9 and 11 had low melting points, and more oil and fat precipitated during processing, resulting in a reduction in the oil and fat that had a moisturizing effect in the chicken cutlet, and in turn poor moisturizing performance. The oils and fats in Comparative Examples 10, 12, and 13 solidified after cooling, possibly due to the unduly high saturation degree of palm stearate. In addition, the oil and fat loss of the entire system was large during processing, such that palm stearate filled the system, and solid fat formed below the melting point. This resulted in a greasy and unsmooth mouthfeel. No obvious protein texture was formed in Comparative Examples 12-16, possibly due to the instability of the water-in-oil emulsion system. This instability resulted in a large amount of oil and fat flowing out during processing, being emulsified, entering the vegan chicken cutlet slurry, and wrapping the textured protein. This led to a mouthfeel lacking chewiness. Palm oil was used in Comparative Example 17. The effects were good, but the saturated oil and fat content was notably higher.

Table 12: Sensory evaluation of vegan chicken cutlets

| Ex./Comp. Ex. | Score |
|---|---|
| Ex. 7 | 8 |

(continued)

| Ex./Comp. Ex. | Score |
| --- | --- |
| Ex. 8 | 9 |
| Ex. 9 | 8.5 |
| Ex. 10 | 8 |
| Ex. 11 | 8 |
| Ex. 12 | 7 |
| Ex. 13 | 7 |
| Comp. Ex. 9 | 6 |
| Comp. Ex. 10 | 6 |
| Comp. Ex. 11 | 6 |
| Comp. Ex. 12 | 6 |
| Comp. Ex. 13 | 6 |
| Comp. Ex. 14 | 6 |
| Comp. Ex. 15 | 6 |
| Comp. Ex. 16 | 6 |
| Comp. Ex. 17 | 6 |

The products were subjected to sensory evaluation in three dimensions: appearance, grainy feel and mouthfeel. Finally, the total score results of the various examples and comparative examples were obtained, as shown in Table 12. As shown by the results, the total scores of the vegan chicken cutlets prepared in all the examples exceeded 7 points, indicating that the vegan chicken cutlets obtained by the present disclosure were generally well received. In the comparative examples, the total scores of all products were less than 6 points, indicating that they were not liked by the subjects.

In summary, according to the processing performances and the product sensory evaluation results of the water-containing low-saturated oils and fats, the low-saturated oils and fats prepared by the present disclosure are suitable for vegetarian products such as vegan chicken cutlets. They have the characteristics of low fat and low saturation, and can provide better product mouthfeel.

The sources of raw materials used in the following Examples III to XII are as follows:

Palm oil 1: iodine value (AV) 15g/100g, Kerry Specialty Oils (Shanghai) Co., Ltd.;
Palm oil 2: iodine value (AV) 33 g/100g, Kerry Specialty Oils (Shanghai) Co., Ltd.;
Palm oil 3: iodine value (AV) 19 g/100g, Kerry Specialty Oils (Shanghai) Co., Ltd.;
Shea butter 1: iodine value (AV) 67g/100g, PGEO Edible Oils Sdn Bhd;
Shea butter 2: iodine value (AV) 35 g/100g, PGEO Edible Oils Sdn Bhd;
Shea butter 3: iodine value (AV) 51 g/100g, PGEO Edible Oils Sdn Bhd;
SBO (soybean oil): Kerry Specialty Oils (Shanghai) Co., Ltd.;
HOSFO (high oleic sunflower oil)): Kerry Specialty Oils (Shanghai) Co., Ltd.;
Citi shortening: Kerry Specialty Oils (Shanghai) Co., Ltd.;
GOLDEN FLAVOUR margarine: Kerry Specialty Oils (Shanghai) Co., Ltd.;
Soybean lecithin: Qinhuangdao Jinhai Cereals & Oils Industry Co., Ltd.;
Monoglyceride: DuPont Danisco (China) Co., Ltd., type HS-C;
Low-gluten flour: Yihai Kerry (Kunshan) Food Industry Co., Ltd., brand Huagu;
High-gluten flour: Yihai Kerry (Kunshan) Food Industry Co., Ltd., brand Blue Gold Mountain;
Highly active dry yeast: Angel Yeast Co., Ltd.;
Bread improver A300: Angel Yeast Co., Ltd.;
Baking powder: Angel Yeast Co., Ltd.;
Milk powder: Fonterra Trading (Shanghai) Co., Ltd.;
Refined salt: China National Salt Industry Co., Ltd.;
Granulated sugar: Daehan Co., Ltd..

**Example III: Preparation of low saturated oil and fat compositions**

The low saturated oil and fat composition formulas are shown in Table 13 below. The various components were weighed according to the proportions shown in Table 13, heated and stirred at 80 °C for at least 30 min to obtain the corresponding oil and fat compositions.

Table 13: Low saturated oil and fat composition formulas (by mass percentage, %)

| Oil and fat composition | Palm oil 1 | Palm oil 2 | Palm oil 3 | Shea butter 1 | Shea butter 2 | Shea butter 3 | SBO | HOSFO |
|---|---|---|---|---|---|---|---|---|
| Oil and fcomposition 12 | 12 | / | / | 20 | / | / |  | 68 |
| Oil and fat composition 13 | 9 | 9 | / | 12 | 2 | / | 38 | 30 |
| Oil and fat composition 14 | 14 | / | / | 25 | / | / | / | 61 |
| Oil and fat composition 15 | / | / | 15 | 30 | / | / | / | 55 |
| Oil and fat composition 16 | 5 | 12.5 | / | / | / | 10 | / | 72.5 |
| Oil and fat composition 17 | 13 | / | / | 9 | 3 | / | 75 | / |
| Oil and fat composition 18 | 4 | 16 | / | 20 | / | / | 60 | / |
| Oil and fat composition 19 | 10 | / | / | 20 | / | / | 60 | 10 |

**Example IV: Evaluation of saturation degree, TAG (PPP, SOS) and oil base state of the oil and fat compositions**

Determination of saturation degree

The fatty acid compositions were determined by gas chromatography according to AOCS Official Methods Ce 1b-89 Reapproved 1997. The proportion of saturated fatty acid(s) is the saturation degree.

Determination of PPP and SOS contents

The triglyceride compositions were determined by gas chromatography according to AOCS Official Methods Ce 5-86 Reapproved 1997, to obtain the PPP and SOS contents.
The saturation degree, TAG (PPP, SOS) and state of each oil and fat composition are shown in Table 14 below.

Table 14: Saturation degree, iodine value, TAG (PPP, SOS) and state of oil and fat compositions

| Oil and fat composition | Saturation degree/% | Iodine value/(g/100g) | PPP conent in composition/% | SOS conent in composition/% | State of oil and fat composition |
|---|---|---|---|---|---|
| Oil and fat composition 12 | 25.2 | 73.0 | 7.8 | 3.6 | Solid |
| Oil and fat composition 13 | 29.8 | 89.9 | 8.4 | 3.7 | Solid |
| Oil and fat composition 14 | 28.2 | 70.7 | 9.2 | 4.6 | Solid |
| Oil and fat composition 15 | 28.9 | 69.7 | 8.9 | 5.5 | Solid |
| Oil and fat composition 16 | 25.1 | 71.6 | 7.1 | 3.6 | Solid |
| Oil and fat composition 17 | 29.8 | 110.3 | 8.1 | 3.9 | Liquid |
| Oil and fat composition 18 | 32.8 | 100.3 | 7.7 | 3.7 | Liquid |
| Oil and fat composition 19 | 28.4 | 104.4 | 6.6 | 3.7 | Liquid |
| Note: P represents palmitic acid, S represents stearic acid, and O represents oleic acid; PPP: triglyceride with 3 P molecules; SOS: stearic acid bound to positions 1 and 3, and oleic acid bound to position 2. | | | | | |

**Example V: Preparation of shortening or margarine**

The oil and fat compositions were used for preparation of shortening or margarine. The specific formulas are shown in Table 15 below.

Table 15: Formulas of examples and comparative examples

| Ex. and Comp. Ex. | Oil phase composition | | | | Oil phase proportion/% | Water phase proportion/% (drinking water) |
| | Oil base | Oil base proportion/% | Emulsifier | | | |
| | | | Monoglyceride proportion/% | Lecithin proportion/ % | | |
|---|---|---|---|---|---|---|
| Ex. 14 | Oil and fat composition 12 | 100 | / | / | 100 | / |
| Ex. 15 | Oil and fat composition 13 | 98.5 | 1 | 0.5 | 100 | / |
| Ex. 16 | Oil and fat composition 14 | 97.5 | 1.5 | 1 | 82 | 18 |
| Ex. 17 | Oil and fat composition 15 | 98 | 1 | 1 | 84 | 16 |
| Ex. 18 | Oil and fat composition 16 | 98 | 1.25 | 0.75 | 85 | 15 |
| Comp. Ex. 18 | Oil and fat composition 17 | 100 | / | / | 100 | / |
| Comp. Ex. 19 | Oil and fat composition 18 | 98.5 | 1 | 0.5 | 100 | / |
| Comp. Ex. 20 | Oil and fat composition 19 | 97.5 | 1.5 | 1 | 82 | 18 |
| Comp. Ex. 21 | Citi shortening, saturation degree 53.2%, no water | | | | | |
| Comp. Ex. 22 | GOLDEN FLAVOUR margarine, saturation degree 51.8%, water 17% | | | | | |

Process for preparing Examples 14-15 and Comparative Examples 18-19:

(1) Weighing the oil phase according to Table 15, completely melting at 75 °C, and keeping at 65 °C for later use;
(2) Adding to a freezer, freezing for 20-30 min (with the outlet temperature being controlled at around 16 °C), taking out the sample and storing it at ambient temperature.

Process for preparing Examples 16-18 and Comparative Example 20:

(1) Weighing the oil phase and water phase respectively according to Table 15, completely melting the oil phase at 75 °C, and keeping at 65 °C for later use;
(2) Pouring the oil phase into the water phase, and stirring at 50-70 °C for 20-50 min (500-1500 rpm);
(3) Adding to a freezer, freezing for 20-30 min (with the outlet temperature being controlled at around 16 °C), taking out the sample and storing it at ambient temperature.

**Example VI: Preparation of biscuits**

The biscuit recipe is shown in Table 16 below. The biscuits were prepared according to the following process:

(1) Providing raw materials: weighing the low-gluten flour and baking powder and placing them on one side of a chopping board; weighing the sugar powder and placing it on a separate side; weighing the oil and fat and placing it on a scraper;

(2) Mixing and kneading the raw materials: Mixing and kneading the oil and fat and sugar, kneading with one hand while making adjustment by scraping the oil and fat from the scraper with the other hand; adding the flour and baking powder, and kneading the dough; and covering the dough with paper to get ready for pressing;

(3) Pressing: Selecting the manual mode, and switching off the cycle button. Putting down the protective cover before pressing, and selecting the pressing direction; selecting a height, and pressing from high to low, generally starting from 10 mm and pressing the biscuits to 3.8 mm; placing them in a freezer for 15 min, and then pressing them into a shape with a mold (if the dough melted during the process, it could be continued to be frozen before operation);

(4) Baking: 160 °C, 9 min; stopping timing after the baking was complete, and removing the baking tray with heat-insulating gloves.

Table 16: Biscuit recipe

| Raw material name | Mass (g) | Proportion (%) |
|---|---|---|
| Low-gluten flour | 90 | 51.15 |
| Baking powder | 1 | 0.57 |
| Sugar powder | 20 | 11.36 |
| Egg | 15 | 8.52 |
| Oil and fat | 50 | 28.41 |
| Total | 176 | 100 |

**Example VII: Determination of biscuit hardness and crispness**

A texture analyzer was used for analysis. The measuring conditions were: P/30R probe; speed before test: 2.0 mm/s; test speed: 1.0 mm/s; speed after test: 2.0 mn/s; compression degree: 30%. The results are shown in Table 17 below.

**Example VIII: Determination of oil precipitation ratio of biscuits**

Fresh biscuits were placed on filter paper and stood at room temperature for 2 days. The mass of the filter paper was measured before and after placing the biscuits.

The steps are as follows: weighing the mass of the clean filter paper to be a; placing biscuits on the filter paper and weighing the mass again to be b; removing the biscuit sample after letting it stand still at room temperature for 2 days, and weighing the mass of the filter paper left there to be c; and calculating the oil precipitation ratio of the biscuits as follows:

$$Oil\ Precipitation\ Ratio = \frac{c - a}{b - a} \times 100\%$$

Wherein: a represents the mass of the clean filter paper (g); b represents the total mass of the biscuit sample and the filter paper (g); c represents the total mass of precipitated oil and the filter paper (g).

The hardness, crispness and oil precipitation ratio of the biscuits are shown in Table 17 below.

Table 17: Hardness, crispness and oil precipitation ratio of biscuits

| Ex. and Comp. Ex. | Saturation degree/% | Hardness/g | Crispness/mm | Oil precipitation ratio/% |
|---|---|---|---|---|
| Ex. 14 | 25.2 | 456±21 | 0.33±0.01 | 0.07±0.1 |
| Ex. 15 | 29.8 | 448±24 | 0.37±0.02 | 0.05±0.1 |
| Ex. 16 | 28.2 | 435±23 | 0.32±0.01 | 0.08±0.1 |
| Ex. 17 | 28.9 | 450±20 | 0.31±0.02 | 0.06±0.1 |
| Ex. 18 | 25.1 | 432±18 | 0.35±0.01 | 0.08±0.1 |
| Comp. Ex. 18 | 29.8 | 462±22 | 0.23±0.01 | 2.7±0.3 |
| Comp. Ex. 19 | 32.8 | 451±19 | 0.26±0.02 | 2.5±0.2 |

(continued)

| Ex. and Comp. Ex. | Saturation degree/% | Hardness/g | Crispness/mm | Oil precipitation ratio/% |
|---|---|---|---|---|
| Comp. Ex. 20 | 28.4 | 433±21 | 0.24±0.01 | 3.1±0.3 |
| Comp. Ex. 21 | 53.2 | 452±21 | 0.35±0.01 | 0.05±0.1 |
| Comp. Ex. 22 | 51.8 | 436±22 | 0.32±0.01 | 0.07±0.1 |

As it can be seen from the results in Table 17, there was no significant difference between the biscuits prepared in Examples 14-18 and Comparative Examples 18-22 in hardness, but the biscuits prepared in Comparative Examples 18-20 were relatively less crisp, and exhibited very obvious oil precipitation, wherein their oil precipitation ratios were all at least 2.5%. In contrast, the oil precipitation ratios of the biscuits prepared in Examples 14-18 and Comparative Examples 21-22 were lower, all no more than 1%. The Citi shortening in Comparative Example 21 and the GOLDEN FLAVOUR margarine in Comparative Example 22 were both all-purpose baking oils and fats, and their saturation degrees were higher than 50%. Therefore, only the various baking fats prepared with the use of the inventive Oil and Fat Compositions 12-16 had the characteristic of low saturation, and exhibited good effect for use in biscuits. They could not only increase the crispness of the biscuits, but also significantly reduce the oil precipitation ratio of the biscuits during storage.

**Example IX: Bread recipe and process**

The bread recipe is shown in Table 18. The bread was prepared as follows:

(1) Providing raw materials: mixing the dry ingredients in the recipe in a dough mixer;
(2) Adding the wet ingredients, and kneading until the dough was stretchable;
(3) Adding the oil and fat, mixing the oil and fat and the dough evenly, and kneading until gluten was formed;
(4) Allowing the kneaded dough to relax at room temperature for 20-30 min;
(5) Splitting and shaping the dough, and continuing to relax the shaped dough at room temperature for 20-30 min;
(6) Placing the relaxed dough in a fermenting box at a temperature of 33-35 °C and a humidity of 75%, and fermenting for 1 hour;
(7) Baking: Placing the fermented dough in an oven, and baking for 30 min at an upper temperature of 210 °C and a lower temperature of 175 °C.

Table 18: Bread recipe

| Raw material name | Mass (g) | Proportion (%) |
|---|---|---|
| High-gluten flour | 600 | 52 |
| Sugar powder | 60 | 5.2 |
| Yeast | 6 | 0.5 |
| Egg | 60 | 5.2 |
| Bread improver | 1.8 | 0.16 |
| Refined salt | 9 | 0.78 |
| Milk powder | 18 | 1.56 |
| Oil and Fat | 120 | 10.4 |
| Water | 280 | 24.2 |
| Total | 1154.8 | 100 |

**Example X: Determination of bread appearance (height, aspect ratio and specific volume)**

The height, width (diameter) and mass of the bread and steamed bun were measured using a volume meter, and the aspect ratio and specific volume were obtained by calculation. The results are shown in Table 19.

**Example XI: Determination of bread texture**

First, the prepared bread sample was cut into slices of 10 mm thickness using a bread slicer, and then the TPA test was performed. The bread was tested under the following conditions: probe: P/36R cylindrical flat-bottom probe; speed before test: 1.0 mm/s; test speed: 5.0 mm/s; speed after test: 5.0 mm/s, and the probe pressed down 10.00 mm after sensing a force of 5.0 g.

The appearance (height, aspect ratio and specific volume) and the texture test results of the bread are shown in Table 19 below.

Table 19: Bread appearance and texture

| Ex. and Comp. Ex. | Bread appearance | | | Texture | | |
|---|---|---|---|---|---|---|
| | Height/cm | Aspect ratio | Specific volume/(mL/g) | Hardness (g) | Gummine ss | Chewines s |
| Ex. 14 | 14.5 | 1.35 | 5.82 | 326±20 | 234±15 | 267±18 |
| Ex. 15 | 14.8 | 1.38 | 5.87 | 372±23 | 226±15 | 275±20 |
| Ex. 16 | 14.5 | 1.36 | 5.83 | 356±19 | 248±16 | 253±17 |
| Ex. 17 | 14.6 | 1.37 | 5.89 | 351±21 | 231±14 | 271±21 |
| Ex. 18 | 14.7 | 1.36 | 5.81 | 363±18 | 242±16 | 281±19 |
| Comp. Ex. 18 | 14.4 | 1.34 | 5.81 | 318±20 | 228±14 | 249±15 |
| Comp. Ex. 19 | 14.5 | 1.35 | 5.82 | 365±22 | 236±15 | 268±16 |
| Comp. Ex. 20 | 14.5 | 1.35 | 5.81 | 351±21 | 241±15 | 259±15 |
| Comp. Ex. 21 | 14.7 | 1.35 | 5.77 | 362±19 | 236±18 | 277±19 |
| Comp. Ex. 22 | 14.6 | 1.36 | 5.82 | 352±20 | 246±18 | 265±19 |

As it can be seen from the results in Table 19, compared with Comparative Examples 21-22 (all-purpose baking oils and fats), the bread prepared in Examples 14-18 had no significant difference in appearance and texture. That is, the various baking oils and fats prepared using the inventive oil and fat compositions had no significant influence on bread appearance and texture, but had the characteristic of low saturation.

**Example XII: Dough kneading time**

During the preparation of bread (kneading process), the time from addition of the oil and fat to formation of gluten, i.e., the dough kneading time, was recorded. The results are shown in Table 20.

Table 20: Dough kneading time in bread preparation

| Ex./Comp. Ex. | Dough kneading time after adding oil and fat/min |
|---|---|
| Ex. 14 | 3.5 |
| Ex. 15 | 3.3 |
| Ex. 16 | 3.4 |
| Ex. 17 | 3.4 |
| Ex. 18 | 3.3 |
| Comp. Ex. 18 | 5.7 |
| Comp. Ex. 19 | 5.4 |
| Comp. Ex. 20 | 5.6 |
| Comp. Ex. 21 | 3.4 |
| Comp. Ex. 22 | 3.5 |

As it can be seen from the results in Table 20, when used for baking bread, compared with Comparative Examples 18-20, the baking oils and fats in Examples 14-18 were able to significantly shorten the dough kneading time. That is, the various baking oils and fats prepared with the use of the inventive Oil and Fat Compositions 12-16 were able to effectively shorten the dough kneading time when used for baking bread, and the dough kneading time was close to that of Comparative Examples 21-22 (all-purpose baking oils and fats). But the baking oils and fats prepared with the use of the inventive Oil and Fat Compositions 12-16 had the characteristic of low saturation.

In summary, the saturation degree of the inventive oil and fat composition according to the present disclosure is relatively low, namely 25-32%. The composition is solid at room temperature. Various baking oils and fats prepared with the use of the composition, when used for baking biscuits, can increase the crispness of the biscuits and significantly reduce the oil precipitation ratio of the biscuits during storage, and when used for baking bread, can significantly shorten the dough formation time, thereby reducing operating costs.

**Claims**

1.    An oil and fat composition, comprising 50-71% oil and fat, 25-40% water and 1-6% protein, based on a total mass of the oil and fat composition, wherein the oil and fat has a saturation degree of 20-42%.

2.    The oil and fat composition according to claim 1, wherein the oil and fat comprises a liquid oil and fat and a solid oil and fat, wherein the liquid oil and fat is an oil and fat that is liquid at ambient temperature, and the solid oil and fat is an oil and fat that is solid or semi-solid at ambient temperature;

   preferably, the liquid oil and fat is selected from one or more of soybean oil, corn oil, sunflower oil, rapeseed oil, rice oil, palm olein, shea olein, palm kernel olein, and coconut oil;
   preferably, the solid oil and fat is selected from one or more of super palm stearin, palm stearin, hydrogenated palm oil, shea stearin, palm kernel stearin, palm oil mid-fraction, and fully hydrogenated vegetable oils; preferably, the fully hydrogenated vegetable oil is selected from one or more of fully hydrogenated rapeseed oil, fully hydrogenated soybean oil, fully hydrogenated sunflower oil, fully hydrogenated shea butter, fully hydrogenated rice oil, and fully hydrogenated palm kernel oil.

3.    The oil and fat composition according to claim 1 or 2, wherein the protein is a plant-originated protein and/or an animal-originated protein;

   preferably, the plant-originated protein is selected from proteins originated from soybean, mung bean, pea, buckwheat, oat, wheat, rice, and peanut, preferably soy protein and/or cereal protein;
   preferably, the animal protein is whey protein and/or casein.

4.    The oil and fat composition according to any one of claims 1 to 3, wherein the oil and fat composition is **characterized by** one or more of the following:

   (1) the oil and fat composition comprises 60-71% oil and fat or 50-60% oil and fat, based on the total mass of the oil and fat composition;
   (2) the oil and fat has a saturation degree of 20-32%, 22-30%, 29-42% or 29-40%; and
   (3) the oil and fat composition comprises 1-4%, 2-4% or 2-6% protein, based on the total mass of the oil and fat composition.

5.    The oil and fat composition according to any one of claims 1 to 4, wherein the oil and fat composition further comprises either or both of a transglutaminase and a gel;

   preferably, the oil and fat composition comprises 0.2-0.8%, preferably 0.4-0.8% transglutaminase, based on the total mass of the oil and fat composition;
   preferably, the oil and fat composition comprises 1-4% gel, based on the total mass of the oil and fat composition;
   preferably, the gel is selected from one or more of carrageenan, pectin, xanthan gum, guar gum, agar, gelatin, sodium alginate, locust bean gum, and konjac gum; preferably from one or more of carrageenan, sodium alginate, and pectin.

6.    The oil and fat composition according to any one of claims 1 to 5, wherein the oil and fat composition comprises 60-71% oil and fat, 25-40% water, 1-4%, preferably 2-4% protein, and 0.2-0.8%, preferably 0.4-0.8% transglutaminase; wherein the oil and fat has a saturation degree of 20-32%, preferably 22-30%, based on the total mass of the oil and fat composition;

preferably, the oil and fat comprises a liquid oil and fat, and optionally a solid oil and fat;
preferably, the oil and fat comprises 60-95%, preferably 80-95% or 75-91% liquid oil and fat and 5-40%, preferably 5-20%, preferably 9-25% solid oil and fat, based on a total mass of the oil and fat;
preferably, the liquid oil and fat is selected from either or both of palm oil and soybean oil;
preferably, the solid oil and fat is selected from either or both of palm stearin and fully hydrogenated palm oil;
preferably, the oil and fat composition has a hardness in the range of 130-350 g.

7.  The oil and fat composition according to any one of claims 1 to 5, wherein the oil and fat composition comprises 50-60% oil and fat, 2-6% protein, 1-4% gel and 31-40% water, based on the total mass of the oil and fat composition; wherein the oil and fat has a saturation degree of 29-42%, preferably 29-40%, and a solid fat content of 5-30%, preferably 5-27% at 25 °C;

preferably, the oil and fat comprises 60-95%, preferably 80-95% liquid oil and fat and 5-40%, preferably 5-20% solid oil and fat, based on a total mass of the oil and fat;
preferably, the liquid oil and fat is selected from one or more of palm olein, shea olein, high oleic sunflower oil, and soybean oil;
preferably, the solid oil and fat comprises either or both of super palm stearin and palm stearin.

8.  An oil and fat composition, comprising: (1) palm oil and shea butter, and (2) a liquid oil and fat other than palm oil and shea butter; wherein the oil and fat composition is solid at ambient temperature, and has a saturation degree of 25-32%;
preferably, the palm oil has an iodine value of ≤ 20 g/100 g; the shea butter has an iodine value in the range of 45-75 g/100 g; a triglyceride PPP content is 7-15%, preferably 7-10%; and a triglyceride SOS content is 3.5-15%, preferably 3.5-10%, more preferably 3.5-6%.

9.  The oil and fat composition according to claim 8, wherein the oil and fat composition is **characterized by** one or more of the following:

(2) the oil and fat composition has a saturation degree of 25-32%, preferably 25-30%;
(2) the oil and fat composition has an iodine value of 60-100 g/100 g, preferably 65-90 g/100 g;
(3) the liquid oil and fat other than palm oil and shea butter is selected from one or more of soybean oil, sunflower seed oil, peanut oil, rapeseed oil, cottonseed oil, corn oil, safflower seed oil, sesame oil, rice bran oil, linseed oil, olive oil, hazelnut oil, pecan oil, almond oil, cashew oil, macadamia oil, pistachio oil, palm kernel oil and coconut oil, as well as fractions and interesterified products of these liquid oils and fats;
(4) the oil and fat composition further comprises an emulsifier; preferably, the emulsifier is selected from one or more of monoglycerides, lecithin, polyglycerol ricinoleate, propylene glycol monostearate and Tween; preferably, a content of the emulsifier is 0.5-3%, preferably 0.5-1% or 1.0-2.5%, based on the total mass of the oil and fat composition.

10.  The oil and fat composition according to claim 8 or 9, wherein a content of palm oil is 1-25%, a content of shea butter is 5-40%, a content of the liquid oil and fat other than palm oil and shea butter is 50-80%; preferably, a content of palm oil is 5-20%, a content of shea butter is 10-30%, a content of the liquid oil and fat is 55-75%, based on the total mass of the oil and fat composition;
preferably, the oil and fat composition comprises 12-18% of palm oil, 10-30% of shea butter, and 55-75% of the liquid oil and fat, wherein a PPP content in the oil and fat composition is 7-10%, and an SOS content is 3.5-6%; preferably, the liquid oil and fat is either of soybean oil and high oleic sunflower oil or a mixture of both; preferably, the liquid oil and fat comprises 30-75% high oleic sunflower oil and 0-40% soybean oil, based on the total mass of the oil and fat composition.

11.  A shortening or margarine, comprising the oil and fat composition according to any one of claims 8-10 and water, wherein a content of the oil and fat composition in the shortening or margarine is 80-90 wt%, and a content of water is 10-20 wt%, based on a total mass of the shortening or margarine.

12.  A food, comprising an oil and fat, wherein all or part of the oil and fat in the food is the oil and fat composition according to any one of claims 1-10, or the shortening or margarine according to claim 11.

**13.** The food according to claim 12, wherein

the food is a baked food; preferably, the food is selected from biscuit, bread, cake, spread, mayonnaise, filling, crisp pastry, croissant and palmier; preferably, all or part of the oil and fat in the food is the oil and fat composition according to any one of claims 5-10, or the shortening or margarine according to claim 11; or
the food is a meat product selected from one or more of sausage, meatball, meat pie, and meat stuffing; preferably, the meat product comprises the oil and fat composition comprising transglutaminase according to any one of claims 5-7; preferably, the sausage comprises 30-40% meat, 2-6% protein and 5-20% of the oil and fat composition, based on a total mass of the sausage; preferably, the meat in the sausage is selected from one or more of chicken, duck, pork, donkey meat, beef, and mutton; or
the food is a vegetarian food, such as a vegan meat product; preferably, the food comprises the oil and fat composition comprising a gel according to any one of claims 5-7; preferably, the food is vegan chicken cutlet, vegan steak, vegan pork chop, vegan meatball, vegan meat pie or vegan meat filling; preferably, a content of the oil and fat composition is 5-15%, based on a total mass of the vegetarian food.

**14.** Use selected from the following:

(1) use of the oil and fat composition containing a gel according to any one of claims 5-7 for improving juiciness, adhesiveness and chewiness of a vegetarian food, especially a vegan meat product, and promoting its mouthfeel, or use of it for preparation of an oil and fat composition for improving juiciness, adhesiveness and chewiness of a vegetarian food (especially a vegan meat product) and promoting its mouthfeel;
(2) use of the oil and fat composition containing transglutaminase according to any one of claims 5-7 for reducing boiling loss and baking loss during cooking, and use of it for preparing an oil and fat composition that can reduce boiling loss and baking loss during cooking;
(3) use of the oil and fat composition according to any one of claims 5-10, or the shortening or margarine according to claim 11 for increasing food crispness, reducing oil precipitation during food storage, and reducing dough kneading time.

**15.** A method for preparing the oil and fat composition according to any one of claims 1-4, comprising:

(1) fully dissolving a protein in water to prepare an aqueous protein solution;
(2) mixing an oil and fat with the aqueous protein solution to form an emulsion;
(3) shaping the emulsion obtained in step (2);
preferably, step (2) is performed by slowly adding a liquid oil and fat into the aqueous protein solution under high-speed shearing conditions to prepare an O/W emulsion;
preferably, the oil and fat composition is the oil and fat composition according to any one of claims 5-7, and the method comprises step (2'): fully mixing the emulsion obtained in step (2) with the protein and/or transglutaminase before performing the shaping in step (3);
preferably, in step (2'), the emulsion obtained is fully mixed with the transglutaminase to obtain a mixture, and then the mixture is subjected to heating and shaping; preferably, the step of heating and shaping is performed at a temperature of 37-42 °C for a period of time of 0.5-1.5 h;
preferably, in step (2'), the emulsion obtained is fully mixed with the protein to obtain a mixture, and then the mixture is allowed to stand still for shaping.

## INTERNATIONAL SEARCH REPORT

| | International application No. |
|---|---|
| | **PCT/CN2022/141767** |

### A. CLASSIFICATION OF SUBJECT MATTER

A23D 7/00(2006.01)i;A23D 7/04(2006.01)i;A23D 9/04(2006.01)i

According to International Patent Classification (IPC) or to both national classification and IPC

### B. FIELDS SEARCHED

Minimum documentation searched (classification system followed by classification symbols)

A23D

Documentation searched other than minimum documentation to the extent that such documents are included in the fields searched

Electronic data base consulted during the international search (name of data base and, where practicable, search terms used)

CNTXT, ENTXTC, WPABSC, DWPI, CNKI, CJFD: 饱和, 饱和度, 蛋白, 谷氨酰胺转移酶, 海藻酸钠, 胶, 琼脂, 人造奶油, 人造肉, 乳木果油, 棕榈油, 素鸡, 素肉, 素食, 植物蛋白肉, 植物肉, saturation, transglutaminase, sodium alginate, gum, agar, shea butter, palm oil, vegetable protein

### C. DOCUMENTS CONSIDERED TO BE RELEVANT

| Category* | Citation of document, with indication, where appropriate, of the relevant passages | Relevant to claim No. |
|---|---|---|
| X | US 5219599 A (LIPIDYNE CORPORATION) 15 June 1993 (1993-06-15) claims 1-9, and description column 1 lines 10-17, column 13 lines 4-55 | 1-4, 12-15 |
| Y | US 5219599 A (LIPIDYNE CORPORATION) 15 June 1993 (1993-06-15) claims 1-9, and description column 1 lines 10-17, column 13 lines 4-55 | 5-7 |
| Y | JP 2014150779 A (FUJI OIL CO., LTD.) 25 August 2014 (2014-08-25) description, paragraph 17 | 5-7 |
| X | CN 113693135 A (JIANGNAN UNIVERSITY) 26 November 2021 (2021-11-26) claims 1-10, and description paragraphs 28-34 | 8-14 |
| X | CN 105638928 A (SOUTHSEAS SPECIALTY FATS INDUSTRIAL (SHANGHAI) CO., LTD.) 08 June 2016 (2016-06-08) claims 1-10, and description paragraphs 73-111 | 8-14 |
| X | CN 110200083 A (HUNAN AGRICULTURAL UNIVERSITY) 06 September 2019 (2019-09-06) claims 1-10 | 1-4 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 February 2023** | **12 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/141767**

| Box No. III | Observations where unity of invention is lacking (Continuation of item 3 of first sheet) |
|---|---|

This International Searching Authority found multiple inventions in this international application, as follows:

Independent claim 1 sets forth a grease composition, which comprises 50-71% of grease, 25-40% of water, and 1-6% of protein.

Independent claim 8 sets forth a grease composition, which comprises (1) palm oil and shea butter, and (2) liquid grease other than the palm oil and the shea butter.

Independent claim 1 and independent claim 8 do not have the same or corresponding special technical features, and therefore lack unity of invention.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/CN2022/141767**

| Patent document cited in search report | | | Publication date (day/month/year) | Patent family member(s) | | | Publication date (day/month/year) |
|---|---|---|---|---|---|---|---|
| US | 5219599 | A | 15 June 1993 | WO | 1991012727 | A1 | 05 September 1991 |
| | | | | AU | 7497191 | A | 18 September 1991 |
| | | | | ZA | 9101353 | A | 26 February 1992 |
| | | | | US | 5100688 | A | 31 March 1992 |
| | | | | US | 5213829 | A | 25 May 1993 |
| | | | | US | 5211976 | A | 18 May 1993 |
| JP | 2014150779 | A | 25 August 2014 | | None | | |
| CN | 113693135 | A | 26 November 2021 | CN | 113693135 | B | 18 October 2022 |
| CN | 105638928 | A | 08 June 2016 | CN | 105638928 | B | 15 October 2019 |
| CN | 110200083 | A | 06 September 2019 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 375172019 T